(19) Europäisches Patentamt
European Patent Office
Office européen des brevets

(11) EP 4 412 164 A1

(12) EUROPEAN PATENT APPLICATION
published in accordance with Art. 153(4) EPC

(43) Date of publication:
**07.08.2024 Bulletin 2024/32**

(21) Application number: **22876883.4**

(22) Date of filing: **29.09.2022**

(51) International Patent Classification (IPC):
***H04L 25/02*** *(2006.01)* ***G06N 3/08*** *(2023.01)*
***G06N 20/00*** *(2019.01)*

(52) Cooperative Patent Classification (CPC):
**G06N 3/08; G06N 20/00; H04L 25/02**

(86) International application number:
**PCT/KR2022/014631**

(87) International publication number:
**WO 2023/055111 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 KR 20210129599**

(71) Applicant: **LG Electronics Inc.**
**Yeongdeungpo-gu**
**Seoul 07336 (KR)**

(72) Inventors:
- **PARK, Haewook**
**Seoul 06772 (KR)**
- **KANG, Jiwon**
**Seoul 06772 (KR)**
- **KIM, Kyuseok**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

# (54) METHOD AND DEVICE FOR TRANSMITTING/RECEIVING WIRELESS SIGNAL IN WIRELESS COMMUNICATION SYSTEM

(57) A method and a device for transmitting/receiving a wireless signal in a wireless communication system are disclosed. A method by which a terminal reports channel state information (CSI), according to one embodiment of the present disclosure, may comprise the steps of: receiving information about a learning algorithm related to the CSI report; receiving at least one reference signal for the CSI report; performing channel estimation on the basis of the at least one reference signal and the information; and transmitting the CSI on the basis of the result of the channel estimation. The information can include identification information about the type or a model of the learning algorithm, and/or an operation-related parameter for the learning algorithm.

FIG.26

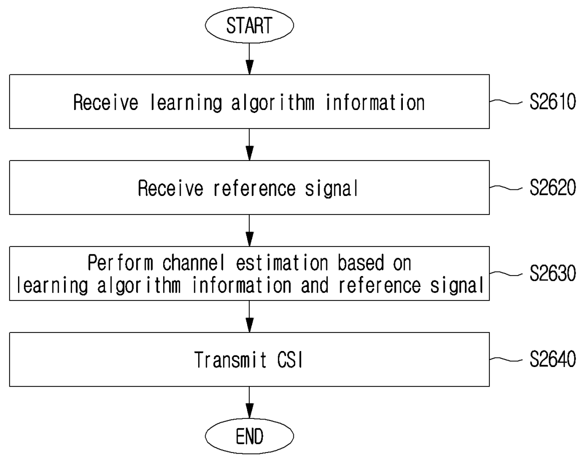


EP 4 412 164 A1

## Description

[Technical Field]

The present disclosure relates to a wireless communication system, and more particularly, to a method and a device for transmitting and receiving a wireless signal in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and a device for transmitting and receiving a wireless signal in a wireless communication system.

In addition, an additional technical object of the present disclosure is to provide a method and a device for transmitting and receiving information related to an AI (Artificial Intelligence)/ML (Machine Learning)-based learning algorithm in an advanced wireless communication system.

The technical objects to be achieved by the present disclosure are not limited to the above-described technical objects, and other technical objects which are not described herein will be clearly understood by those skilled in the pertinent art from the following description.

[Technical Solution]

A method for performing channel state information (CSI) reporting by a user equipment (UE) in a wireless communication system according to an aspect of the present disclosure may comprise: receiving information on a learning algorithm related to the CSI report; receiving at least one reference signal for the CSI reporting; performing channel estimation based on the at least one reference signal and the information; and transmitting CSI based on a result of the channel estimation. Herein, the information may include at least one of identification information for a type or model of the learning algorithm or an operation-related parameter for the learning algorithm.

A method for receiving channel state information (CSI) reporting by a base station in a wireless communication system according to an additional aspect of the present disclosure may comprise: transmitting information on a learning algorithm related to the CSI report; transmitting at least one reference signal for the CSI reporting; and receiving CSI according to channel estimation based on the at least one reference signal and the information. Herein, the information may include at least one of identification information for a type or model of the learning algorithm or an operation-related parameter for the learning algorithm.

[Technical Effects]

According to an embodiment of the present disclosure, channel state measurement and channel state information reporting according to advanced wireless communication system-based prediction/optimization may be supported.

According to an embodiment of the present disclosure, optimized channel estimation may be supported through sharing of AI/ML-based learning algorithms/models between the base station and the UE.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of multiple TRPs transmission in a wireless communication system to which the present disclosure may be applied.
FIG. 8 is a diagram illustrating a downlink transmission and reception operation in a wireless communication system to which the present disclosure can be applied.
FIG. 9 is a diagram illustrating an uplink transmission and reception operation in a wireless communication system to which the present disclosure can be applied.
FIG. 10 illustrates a classification of artificial intelligence.
FIG. 11 illustrates a feed-forward neural network.
FIG. 12 illustrates a recurrent neural network.
FIG. 13 illustrates a convolutional neural network.
FIG. 14 illustrates an auto encoder.
FIG. 15 illustrates a functional framework for an AI operation.
FIG. 16 is a diagram illustrating split AI inference.
FIG. 17 illustrates an application of a functional framework in a wireless communication system.
FIG. 18 illustrates an application of a functional framework in a wireless communication system.
FIG. 19 illustrates an application of a functional framework in a wireless communication system.
FIG. 20 illustrates a 1D CNN structure for AI/ML-based channel estimation in a wireless communication system to which the present disclosure may be applied.
FIG. 21 illustrates an output value estimation method in a 1D CNN structure for AI/ML-based channel estimation in a wireless communication system to which the present disclosure may be applied.
FIG. 22 illustrates a 2D CNN structure for AI/ML-based channel estimation in a wireless communication system to which the present disclosure may be applied.
FIG. 23 illustrates an output value estimation method in a 2D CNN structure for AI/ML-based channel estimation in a wireless communication system to which the present disclosure may be applied.
FIG. 24 illustrates padding and pooling in a CNN structure for channel estimation based on AI/ML in a wireless communication system to which the present disclosure may be applied.
FIG. 25 is a diagram illustrating a signaling procedure between a base station and a UE for a method for reporting channel state information according to an embodiment of the present disclosure.
FIG. 26 is a diagram illustrating an operation of a UE for a method for reporting channel state information according to an embodiment of the present disclosure.
FIG. 27 is a diagram illustrating an operation of a network device for a method for reporting channel state information according to an embodiment of the present disclosure.
FIG. 28 is a diagram which illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-R_AN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - | 15, 30, 60kHz |
| | 7125MHz | |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0,..., N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0,...,$N_{RB}^{\mu}N_{sc}^{RB}$-1 is an index in a frequency domain and l'=0,...,$2^{\mu}N_{symb}^{(\mu)}$-1 refers to a position of a symbol in a subframe. When referring to a resource element in a slot, an index pair (k,l) is used. Here, l=0,...,$N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is

identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWB,i}^{size,\mu}$-1 in a bandwidth part (BWP) and i is a number of a BWP. A relationship between a physical resource block $n_{PRB}$ and a common resource block $n_{CBB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

In addition, MTRP-URLLC may mean that a M TRPs transmit the same transport block(TB) by using different layer/time/frequency. A UE configured with a MTRP-URLLC transmission scheme receives an indication on multiple TCI state(s) through DCI and may assume that data received by using a QCL RS of each TCI state are the same TB. On the other hand, MTRP-eMBB may mean that M TRPs transmit different TBs by using different layer/time/frequency. A UE configured with a MTRP-eMBB transmission scheme receives an indication on multiple TCI state(s) through DCI and may assume that data received by using a QCL RS of each TCI state are different TBs. In this regard, as UE separately classifies and uses a RNTI configured for MTRP-URLLC and a RNTI configured for MTRP-eMBB, it may decide/determine whether the corresponding M-TRP transmission is URLLC transmission or eMBB transmission. In other words, when CRC masking of DCI received by UE is performed by using a RNTI configured for MTRP-URLLC, it may correspond to URLLC transmission, and when CRC masking of DCI is performed by using a RNTI configured for MTRP-eMBB, it may correspond to eMBB transmission.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex).

NCJT(Non-coherent joint transmission) is a scheme in which a plurality of transmission points (TP) transmit data to one terminal by using the same time frequency resource, TPs transmit data by using a different DMRS(Demodulation Multiplexing Reference Signal) between TPs through a different layer (i.e., through a different DMRS port).

A TP delivers data scheduling information through DCI to a terminal receiving NCJT. Here, a scheme in which each TP participating in NCJT delivers scheduling information on data transmitted by itself through DCI is referred to as 'multi DCI based NCJT'. As each of N TPs participating in NCJT transmission transmits DL grant DCI and a PDSCH to UE, UE receives N DCI and N PDSCHs from N TPs. Meanwhile, a scheme in which one representative TP delivers scheduling information on data transmitted by itself and data transmitted by a different TP (i.e., a TP participating in NCJT) through one DCI is referred to as 'single DCI based NCJT'. Here, N TPs transmit one PDSCH, but each TP transmits only some layers of multiple layers included in one PDSCH. For example, when 4-layer data is transmitted, TP 1 may transmit 2 layers and TP 2 may transmit 2 remaining layers to UE.

Hereinafter, partially overlapped NCJT will be described.

In addition, NCJT may be classified into fully overlapped NCJT that time frequency resources transmitted by each TP are fully overlapped and partially overlapped NCJT that only some time frequency resources are overlapped. In other words, for partially overlapped NCJT, data of both of TP 1 and TP 2 are transmitted in some time frequency resources and data of only one TP of TP 1 or TP 2 is transmitted in remaining time frequency resources.

Hereinafter, a method for improving reliability in Multi-TRP will be described.

As a transmission and reception method for improving reliability using transmission in a plurality of TRPs, the following two methods may be considered.

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 15(b), it may have a disadvantage that a code rate corresponding to a TB is higher compared to FIG. 15(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Downlink transmission and reception operation

FIG. 8 is a diagram illustrating a downlink transmission and reception operation in a wireless communication system to which the present disclosure can be applied.

Referring to FIG. 8, a base station schedules downlink transmission such as a frequency/time resource, a transport layer, a downlink precoder, an MCS, etc. (S1401). In particular, a base station can determine a beam for PDSCH transmission to a UE through the operations described above.

A UE receives DCI for downlink scheduling (i.e., including scheduling information of a PDSCH) from a base station on a PDCCH (S1402).

DCI format 1_0, 1_1, or 1_2 may be used for downlink scheduling, and in particular, DCI format 1_1 includes the following information: an identifier for a DCI format, a bandwidth part indicator, a frequency domain resource assignment, a time domain resource assignment, a PRB bundling size indicator, a rate matching indicator, a ZP CSI-RS trigger, antenna port(s), a transmission configuration indication (TCI), an SRS request, a DMRS (Demodulation Reference Signal) sequence initialization

In particular, a number of DMRS ports may be scheduled according to each state indicated in an antenna port(s) field, and also single-user (SU)/multi-user (MU) user transmission scheduling is possible.

In addition, a TCI field is composed of 3 bits, and a QCL for a DMRS is dynamically indicated by indicating up to 8 TCI states according to a TCI field value.

A UE receives downlink data from a base station on a PDSCH (S1403).

When a UE detects a PDCCH including DCI formats 1_0, 1_1, and 1_2, it decodes a PDSCH according to indications by corresponding DCI.

Here, when a UE receives a PDSCH scheduled by DCI format 1, a DMRS configuration type may be configured for the UE by a higher layer parameter 'dmrs-Type', and a DMRS type is used to receive a PDSCH. In addition, a maximum number of front-loaded DMRA symbols for the PDSCH may be configured for a terminal by a higher layer parameter 'maxLength'.

For DMRS configuration type 1, if a single codeword is scheduled for a UE and an antenna port mapped to an index of {2, 9, 10, 11 or 30} is indicated or if a single codeword is scheduled and an antenna port mapped to an index of {2, 9, 10, 11 or 12} or {2, 9, 10, 11, 30 or 31} is indicated, or if two codewords are scheduled, the UE assumes that all remaining orthogonal antenna ports are not associated with PDSCH transmission to another UE.

Alternatively, for DMRS configuration type 1, if a single codeword is scheduled for a UE and an antenna port mapped to an index of {2, 10 or 23} is indicated, or if a single codeword is scheduled and an antenna port mapped to an index of {2, 10, 23 or 24} or {2, 10, 23 or 58} is indicated, or if two codewords are scheduled for a UE, the UE assumes that all remaining orthogonal antenna ports are not associated with PDSCH transmission to another UE.

When a UE receives a PDSCH, a precoding unit (precoding granularity) P' may be assumed to be a contiguous resource block in a frequency domain. Here, P' may correspond to one of {2, 4, wideband}.

If P' is determined to be wideband, a UE does not expect to be scheduled with non-contiguous PRBs, and a UE can assume that the same precoding is applied to allocated resources.

On the other hand, if P' is determined to be one of {2, 4}, a precoding resource block group (PRG) is divided into P' consecutive PRBs. An actual number of consecutive PRBs in each PRG may be one or more. A UE may assume that the same precoding is applied to consecutive downlink PRBs within a PRG.

In order for a UE to determine a modulation order, a target code rate, and a transport block size in a PDSCH, the UE first reads a 5-bit MCD field in DCI and determines a modulation order and a target code rate. Then, the UE reads a redundancy version field in the DCI and determines a redundancy version. Then, a UE determines a transport block size using a number of layers and a total number of allocated PRBs before rate matching.

Uplink transmission and reception operation

FIG. 9 is a diagram illustrating an uplink transmission and reception operation in a wireless communication system to which the present disclosure can be applied.

Referring to FIG. 9, a base station schedules uplink transmission such as a frequency/time resource, a transport layer, an uplink precoder, an MCS, etc. (S1501). In particular, a base station can determine a beam for PUSCH transmission to a UE through the operations described above.

A UE receives DCI for uplink scheduling (i.e., including scheduling information of a PUSCH) from a base station on a PDCCH (S1502).

DCI format 0_0, 0_1, or 0_2 may be used for uplink scheduling, and in particular, DCI format 0_1 includes the following information: an identifier for a DCI format, a UL/SUL (supplementary uplink) indicator, a bandwidth part indicator, a frequency domain resource assignment, a time domain resource assignment, a frequency hopping flag, a modulation and coding scheme (MCS), an SRS resource indicator (SRI), precoding information and number of layers, antenna port(s), an SRS request, a DMRS sequence initialization, a UL-SCH (Uplink Shared Channel) indicator

In particular, SRS resources configured in an SRS resource set associated with the higher upper layer parameter 'usage' may be indicated by an SRS resource indicator field. Additionally, the 'spatialRelationInfo' can be configured for each SRS resource, and its value can be one of {CRI, SSB, SRI}.

A UE transmits uplink data to a base station on a PUSCH (S1503).

When a UE detects a PDCCH including DCI formats 0_0, 0_1, and 0_2, it transmits a PUSCH according to indications by corresponding DCI.

Two transmission methods are supported for PUSCH transmission: codebook-based transmission and non-codebook-based transmission:

i) When the higher layer parameter 'txConfig' is set to 'codebook', a UE is configured to codebook-based transmission. On the other hand, when the higher layer parameter 'txConfig' is set to 'nonCodebook', a UE is configured to non-codebook based transmission. If the up higher per layer parameter 'txConfig' is not set, a UE does not expect to be scheduled by DCI format 0_1. When a PUSCH is scheduled by DCI format 0_0, PUSCH transmission is based on a single antenna port.

For codebook-based transmission, a PUSCH may be scheduled in DCI format 0_0, DCI format 0_1, DCI format 0_2, or semi-statically. If this PUSCH is scheduled by DCI format 0_1, a UE determines a PUSCH transmission precoder based on an SRI, a TPMI (Transmit Precoding Matrix Indicator), and a transmission rank from DCI, as given by an SRS resource indicator field and a precoding information and number of layers field. A TPMI is used to indicate a precoder to be applied across antenna ports, and corresponds to an SRS resource selected by an SRI when multiple SRS resources are configured. Alternatively, if a single SRS resource is configured, a TPMI is used to indicate a precoder to be applied across antenna ports and corresponds to that single SRS resource. A transmission precoder is selected from an uplink codebook having the same number of antenna ports as the higher layer parameter 'nrofSRS-Ports'. When a UE is configured with the higher layer parameter 'txConfig' set to 'codebook', the UE is configured with at least one SRS resource. An SRI indicated in slot n is associated with the most recent transmission of an SRS resource identified by the SRI, where the SRS resource precedes a PDCCH carrying the SRI (i.e., slot n).

ii) For non-codebook based transmission, a PUSCH may be scheduled in DCI format 0_0, DCI format 0_1, or semi-statically. When multiple SRS resources are configured, a UE can determine a PUSCH precoder and a transmission rank based on a wideband SRI, where, the SRI is given by an SRS resource indicator in DCI or by the higher layer parameter 'srs-ResourceIndicator'. A UE uses one or multiple SRS resources for SRS transmission, where the number of SRS resources can be configured for simultaneous transmission within the same RB based on a UE capability. Only one SRS port is configured for each SRS resource. Only one SRS resource can be configured with the higher layer parameter 'usage' set to 'nonCodebook'. The maximum number of SRS resources that can be configured for non-codebook based uplink transmission is 4. An SRI indicated in slot n is associated with the most recent transmission of an SRS resource identified by the SRI, where the SRS transmission precedes a PDCCH carrying the SRI (i.e., slot n).

CSI-related Operation

In an NR (New Radio) system, a CSI-RS(channel state information-reference signal) is used for time and/or frequency tracking, CSI computation, L1(layer 1)-RSRP(reference signal received power) computation and mobility. Here, CSI computation is related to CSI acquisition and L1-RSRP computation is related to beam management (BM).

CSI(channel state information) collectively refers to information which may represent quality of a radio channel (or also referred to as a link) formed between a terminal and an antenna port.

- To perform one of the usages of a CSI-RS, a terminal (e.g., user equipment, UE) receives configuration information related to CSI from a base station (e.g., general Node B, gNB) through RRC(radio resource control) signaling.

The configuration information related to CSI may include at least one of information related to a CSI-IM (interference management) resource, information related to CSI measurement configuration, information related to CSI resource configuration, information related to a CSI-RS resource or information related to CSI report configuration.

i) Information related to a CSI-IM resource may include CSI-IM resource information, CSI-IM resource set information, etc. A CSI-IM resource set is identified by a CSI-IM resource set ID (identifier) and one resource set includes at least one CSI-IM resource. Each CSI-IM resource is identified by a CSI-IM resource ID.

ii) Information related to CSI resource configuration may be expressed as CSI-ResourceConfig IE. Information related to a CSI resource configuration defines a group which includes at least one of an NZP(non zero power) CSI-RS resource set, a CSI-IM resource set or a CSI-SSB resource set. In other words, the information related to a CSI resource configuration may include a CSI-RS resource set list and the CSI-RS resource set list may include at least one of a NZP CSI-RS resource set list, a CSI-IM resource set list or a CSI-SSB resource set list. A CSI-RS resource set is identified by a CSI-RS resource set ID and one resource set includes at least one CSI-RS resource. Each CSI-RS resource is identified by a CSI-RS resource ID.

Parameters representing a usage of a CSI-RS (e.g., a 'repetition' parameter related to BM, a 'trs-Info' parameter related to tracking) may be configured per NZP CSI-RS resource set.

iii) Information related to a CSI report configuration includes a report configuration type (reportConfigType) parameter representing a time domain behavior and a report quantity (reportQuantity) parameter representing CSI-related quantity for a report. The time domain behavior may be periodic, aperiodic or semi-persistent.

- A terminal measures CSI based on the configuration information related to CSI.

The CSI measurement may include (1) a process in which a terminal receives a CSI-RS and (2) a process in which CSI is computed through a received CSI-RS and detailed description thereon is described after.

For a CSI-RS, RE(resource element) mapping of a CSI-RS resource in a time and frequency domain is configured by higher layer parameter CSI-RS-ResourceMapping.

- A terminal reports the measured CSI to a base station.

In this case, when quantity of CSI-ReportConfig is configured as 'none (or No report)', the terminal may omit the report. But, although the quantity is configured as 'none (or No report)', the terminal may perform a report to a base station. When the quantity is configured as 'none', an aperiodic TRS is triggered or repetition is configured. In this case, only when repetition is configured as 'ON', a report of the terminal may be omitted.

Artificial Intelligence (AI) operation

With the technological advancement of artificial intelligence/machine learning (AI/ML), node(s) and UE(s) in a wireless communication network are becoming more intelligent/advanced. In particular, due to the intelligence of networks/base stations, it is expected that it will be possible to rapidly optimize and derive/apply various network/base station decision parameter values (e.g., transmission/reception power of each base station, transmission power of each UE, precoder/beam of base station/UE, time/frequency resource allocation for each UE, duplex method of each base station, etc.) according to various environmental parameters (e.g., distribution/location of base stations, distribution/location/material of buildings/furniture, etc., location/movement direction/speed of UEs, climate information, etc.). Following this trend, many standardization organizations (e.g., 3GPP, O-RAN) are considering introduction, and studies on this are also actively underway.

AI-related descriptions and operations described below may be supplemented to clarify technical characteristics of methods proposed in the present disclosure described later.

FIG. 10 illustrates a classification of artificial intelligence.

Referring to FIG. 10, artificial intelligence (AI) corresponds to all automation in which machines can replace work that should be done by humans.

Machine Learning (ML) refers to a technology in which machines learn patterns for decision-making from data on their own without explicitly programming rules.

Deep Learning is an artificial neural network-based model that allows a machine to perform feature extraction and decision from unstructured data at once. The algorithm relies on a multi-layer network of interconnected nodes for feature extraction and transformation, inspired by the biological nervous system, or Neural Network. Common deep learning network architectures include deep neural networks (DNNs), recurrent neural networks (RNNs), and convolutional neural networks (CNNs).

AI (or referred to as AI/ML) can be narrowly referred to as artificial intelligence based on deep learning, but is not limited to this in the present disclosure. That is, in the present disclosure, AI (or AI/ML) may collectively refer to automation technologies applied to intelligent machines (e.g., UE, RAN, network nodes, etc.) that can perform tasks like humans.

AI (or AI/ML) can be classified according to various criteria as follows.

1. Offline/online learning

a) Offline Learning

Offline learning follows a sequential procedure of database collection, learning, and prediction. In other words, collection and learning can be performed offline, and the completed program can be installed in the field and used for prediction work.

b) Online Learning

It refers to a method of gradually improving performance through incremental additional learning with additionally generated data by utilizing a fact that data which may be utilized for recent learning is continuously generated through the Internet. Learning is performed in real time in a (bundle) unit of specific data collected online, allowing the system to quickly adapt to changing data changing.

Only online learning may be used to build an AI system and learning may be performed only with data generated in real time, or after offline learning is performed by using a predetermined data set, additional learning may be performed by using real-time data generated additionally (online+offline learning).

2. Classification according to AI/ML Framework concept

a) Centralized Learning

In centralized learning, training data collected from a plurality of different nodes is reported to a centralized node, all data resources/storage/learning (e.g., supervised learning, unsupervised learning, reinforcement learning, etc.) are performed in one centralized node.

b) Federated Learning

Federated learning is a collective model built on data that exists across distributed data owners. Instead of collecting data into a model, AI/ML models are imported into a data source, allowing local nodes/individual devices to collect data and train their own copies of the model, eliminating the need to report the source data to a central node. In federated learning, the parameters/weights of an AI/ML model can be sent back to the centralized node to support general model training. Federated learning has advantages in terms of increased computation speed and information security. In other words, the process of uploading personal data to the central server is unnecessary, preventing leakage and misuse of personal information.

c) Distributed Learning

Distributed learning refers to the concept in which machine learning processes are scaled and distributed across a cluster of nodes. Training models are split and shared across multiple nodes operating simultaneously to speed up model training.

3. Classification according to learning method

a) Supervised Learning

Supervised learning is a machine learning task that aims to learn a mapping function from input to output, given a labeled data set. The input data is called training data and has known labels or results. An example of supervised learning is as follows.

- Regression: Linear Regression, Logistic Regression
- Instance-based Algorithms: k-Nearest Neighbor (KNN)
- Decision Tree Algorithms: Classification and Regression Tree (CART)
- Support Vector Machines (SVM)
- Bayesian Algorithms: Naive Bayes
- Ensemble Algorithms: Extreme Gradient Boosting, Bagging: Random Forest

Supervised learning can be further grouped into regression and classification problems, where classification is predicting a label and regression is predicting a quantity.

b) Unsupervised Learning

Unsupervised learning is a machine learning task that aims to learn features that describe hidden structures in unlabeled data. The input data is not labeled and there are no known results. Some examples of unsupervised learning include K-means clustering, Principal Component Analysis (PCA), nonlinear Independent Component Analysis (ICA), and Long-Short-Term Memory (LSTM).

c) Reinforcement Learning (RL)

In reinforcement learning (RL), the agent aims to optimize long-term goals by interacting with the environment based on a trial and error process, and is goal-oriented learning based on interaction with the environment. An example of the RL algorithm is as follows.

- Q-learning
- Multi-armed bandit learning
- Deep Q Network
- State-Action-Reward-State-Action (SARSA)
- Temporal Difference Learning
- Actor-critic reinforcement learning
- Deep deterministic policy gradient (DDPG)
- Monte-Carlo tree search

Additionally, reinforcement learning can be grouped into model-based reinforcement learning and model-free reinforcement learning as follows.

- Model-based reinforcement learning: refers to RL algorithm that uses a prediction model. Using a model of the various dynamic states of the environment and which states lead to rewards, the probabilities of transitions between states are obtained.
- Model-free reinforcement learning: refers to RL algorithm based on value or policy that achieves the maximum future reward. Multi-agent environments/states are computationally less complex and do not require an accurate representation of the environment.

Additionally, RL algorithm can also be classified into value-based RL vs. policy-based RL, policy-based RL vs. non-policy RL, etc.

Hereinafter, representative models of deep learning will be exemplified.

FIG. 11 illustrates a feed-forward neural network.

A feed-forward neural network (FFNN) is composed of an input layer, a hidden layer, and an output layer.

In FFNN, information is transmitted only from the input layer to the output layer, and if there is a hidden layer, it passes through it.

Potential parameters that may be considered in relation to FNNN are as follows.

- Category 1: Number of neurons in each layer, number of hidden layers, activation function of each layer/neuron
- Category 2: Weight and bias of each layer/neuron
- Category 3: loss function, optimizer

As an example, Category 1, Category 2, and Category 3 may be considered in terms of training, and Category 1 and Category 2 may be considered in terms of inference.

FIG. 12 illustrates a recurrent neural network.

A recurrent neural network (RNN) is a type of artificial neural network in which hidden nodes are connected to directed edges to form a directed cycle. This model is suitable for processing data that appears sequentially, such as voice and text.

In FIG. 12, A represents a neural network, xt represents an input value, and ht represents an output value. Here, ht may refer to a state value representing the current state based on time, and ht-1 may represent a previous state value.

One type of RNN is LSTM (Long Short-Term Memory), which has a structure that adds a cell-state to the hidden state of the RNN. LSTM can erase unnecessary memories by adding an input gate, forgetting gate, and output gate to the RNN cell (memory cell of the hidden layer). LSTM adds cell state compared to RNN.

FIG. 13 illustrates a convolutional neural network.

Convolutional neural network (CNN) is used for two purposes: reducing model complexity and extracting good features by applying convolution operations commonly used in the image processing or image processing fields.

- Kernel or filter: refers to a unit/structure that applies weight to input of a specific range/unit. The kernel (or filter) can be changed through learning.
- Stride: refers to the movement range of moving the kernel within the input.
- Feature map: refers to the result of applying the kernel to input. Several feature maps can be extracted to ensure robustness to distortion, change, etc.
- Padding: refers to a value added to adjust the size of the feature map.
- Pooling: refers to an operation (e.g., max pooling, average pooling) to reduce the size of the feature map by downsampling the feature map.

Potential parameters that may be considered in relation to CNN are as follows.

- Category 1: Structural information of each layer (e.g., number of hidden layers, padding presence/value, pooling presence/type, etc.)
- Category 2: Size/weight of kernel, activation function/stride of each layer/kernel, bias of each layer/kernel
- Category 3: loss function, optimizer

As an example, Category 1, Category 2, and Category 3 may be considered in terms of training, and Category 1 and Category 2 may be considered in terms of inference.

FIG. 14 illustrates an auto encoder.

Auto encoder refers to a neural network that receives a feature vector x (x1, x2, x3, ...) as input and outputs the same or similar vector x' (x'1, x'2, x'3, ...)'.

Auto encoder has the same characteristics as the input node and output node. Since the auto encoder reconstructs the input, the output can be referred to as reconstruction. Additionally, auto encoder is a type of unsupervised learning.

The loss function of the auto encoder illustrated in FIG. 14 is calculated based on the difference between input and output, and based on this, the degree of input loss is identified and an optimization process is performed in the auto encoder to minimize the loss.

Hereinafter, for a more specific explanation of AI (or AI/ML), terms can be defined as follows.

- Data collection: Data collected from the network nodes, management entity or UE, as a basis for AI model training, data analytics and inference.
- AI Model: A data driven algorithm by applying AI techniques that generates a set of outputs consisting of predicted information and/or decision parameters, based on a set of inputs.

AI/ML Training: An online or offline process to train an AI model by learning features and patterns that best present data and get the trained AI/ML model for inference.

AI/ML Inference: A process of using a trained AI/ML model to make a prediction or guide the decision based on collected data and AI/ML model.

FIG. 15 illustrates a functional framework for an AI operation.

Referring to Figure 15, the data collection function (10) is a function that collects input data and provides processed input data to the model training function (20) and the model inference function (30).

Examples of input data may include measurements from UEs or different network entities, feedback from Actor, output from an AI model.

The Data Collection function (10) performs data preparation based on input data and provides input data processed through data preparation. Here, the Data Collection function (10) does not perform specific data preparation (e.g., data pre-processing and cleaning, formatting and transformation) for each AI algorithm, and data preparation common to AI algorithms can be performed.

After performing the data preparation process, the Model Training function (10) provides Training Data (11) to the Model Training function (20) and provides Inference Data (12) to the Model Inference function (30). Here, Training Data (11) is data required as input for the AI Model Training function (20). Inference Data (12) is data required as input for the AI Model Inference function (30).

The Data Collection function (10) may be performed by a single entity (e.g., UE, RAN node, network node, etc.), but may also be performed by a plurality of entities. In this case, Training Data (11) and Inference Data (12) can be provided from a plurality of entities to the Model Training function (20) and the Model Inference function (30), respectively.

Model Training function (20) is a function that performs the AI model training, validation, and testing which may generate model performance metrics as part of the model testing procedure. The Model Training function (20) is also responsible for data preparation (e.g., data pre-processing and cleaning, formatting, and transformation) based on Training Data (11) delivered by a Data Collection function (10), if required.

Here, Model Deployment/Update (13) is used to initially deploy a trained, validated, and tested AI model to the Model Inference function (30) or to deliver an updated model to the Model Inference function (30).

Model Inference function (30) is a function that provides AI model inference output (16) (e.g., predictions or decisions). Model Inference function (30) may provide Model Performance Feedback (14) to Model Training function (20) when applicable. The Model Inference function (30) is also responsible for data preparation (e.g., data pre-processing and cleaning, formatting, and transformation) based on Inference Data (12) delivered by a Data Collection function (10), if required.

Here, Output (16) refers to the inference output of the AI model produced by a Model Inference function (30), and details of inference output may be use case specific.

Model Performance Feedback (14) may be used for monitoring the performance of the AI model, when available, and this feedback may be omitted.

Actor function (40) is a function that receives the Output (16) from the Model Inference function (30) and triggers or performs corresponding actions. The Actor function (40) may trigger actions directed to other entities (e.g., one or more UEs, one or more RAN nodes, one or more network nodes, etc) or to itself.

Feedback (15) may be used to derive Training data (11), Inference data (12) or to monitor the performance of the AI Model and its impact to the network, etc.

Meanwhile, the definitions of training/validation/test in the data set used in AI/ML can be divided as follows.

- Training data: refers to a data set for learning a model.
- Validation data: This refers to a data set for verifying a model for which learning has already been completed. In other words, it usually refers to a data set used to prevent over-fitting of the training data set.

It also refers to a data set for selecting the best among various models learned during the learning process. Therefore, it can also be considered as a type of learning.

- Test data: refers to a data set for final evaluation. This data is unrelated to learning.

In the case of the data set, if the training set is generally divided, within the entire training set, training data and validation data can be divided into 8:2 or 7:3, and if testing is included, 6:2:2 (training: validation: test) can be used.

Depending on the capability of the AI/ML function between a base station and a UE, a cooperation level can be defined as follows, and modifications can be made by combining the following multiple levels or separating any one level.

Cat 0a) No collaboration framework: AI/ML algorithm is purely implementation-based and do not require any air interface changes.

Cat 0b) This level corresponds to a framework without cooperation but with a modified air interface tailored to efficient implementation-based AI/ML algorithm.

Cat 1) This involves inter-node support to improve the AI/ML algorithm of each node. This applies if a UE receives support from a gNB (for training, adaptation, etc.) and vice versa. At this level, model exchange between network nodes is not required.

Cat 2) Joint ML tasks between a UE and a gNB may be performed. This level requires AI/ML model command and an exchange between network nodes.

The functions previously illustrated in FIG. 15 may be implemented in a RAN node (e.g., base station, TRP, base station central unit (CU), etc.), a network node, a network operator's operation administration maintenance (OAM), or a UE.

Alternatively, the function illustrated in FIG. 15 may be implemented through cooperation of two or more entities among a RAN, a network node, an OAM of network operator, or a UE. For example, one entity may perform some of the functions of FIG. 15 and other entities may perform the remaining functions. As such, as some of the functions illustrated in FIG. 15 are performed by a single entity (e.g., UE, RAN node, network node, etc.), transmission/provision of data/information between each function may be omitted. For example, if the Model Training function (20) and the Model Inference function (30) are performed by the same entity, the delivery/provision of Model Deployment/Update (13) and Model Performance Feedback (14) can be omitted.

Alternatively, any one of the functions illustrated in FIG. 15 may be performed through collaboration between two or more entities among a RAN, a network node, an OAM of a network operator, or a UE. This can be referred to as a split AI operation.

FIG. 16 is a diagram illustrating split AI inference.

FIG. 16 illustrates a case in which, among split AI operations, the Model Inference function is performed in cooperation with an end device such as a UE and a network AI/ML endpoint.

In addition to the Model Inference function, the Model Training function, the Actor, and the Data Collection function are respectively split into multiple parts depending on the current task and environment, and can be performed by multiple entities collaborating.

For example, computation-intensive and energy-intensive parts may be performed at a network endpoint, while parts sensitive to personal information and delay-sensitive parts may be performed at an end device. In this case, an end device can execute a task/model from input data to a specific part/layer and then transmit intermediate data to a network endpoint. A network endpoint executes the remaining parts/layers and provides inference outputs to one or more devices that perform an action/task.

FIG. 17 illustrates an application of a functional framework in a wireless communication system.

FIG. 7 illustrates a case where the AI Model Training function is performed by a network node (e.g., core network node, network operator's OAM, etc.) and the AI Model Inference function is performed by a RAN node (e.g., base station, TRP, CU of base station, etc.).

Step 1: RAN Node 1 and RAN Node 2 transmit input data (i.e., Training data) for AI Model Training to the network node. Here, RAN Node 1 and RAN Node 2 may transmit the data collected from the UE (e.g., UE measurements related to RSRP, RSRQ, SINR of the serving cell and neighboring cells, UE location, speed, etc.) to the network node.

Step 2: The network node trains the AI Model using the received training data.

Step 3: The network node distributes/updates the AI Model to RAN Node 1 and/or RAN Node 2. RAN Node 1 (and/or RAN Node 2) may continue to perform model training based on the received AI Model.

For convenience of explanation, it is assumed that the AI Model has been distributed/updated only to RAN Node 1.

Step 4: RAN Node 1 receives input data (i.e., Inference data) for AI Model Inference from the UE and RAN Node 2.

Step 5: RAN Node 1 performs AI Model Inference using the received Inference data to generate output data (e.g., prediction or decision).

Step 6: If applicable, RAN Node 1 may send model performance feedback to the network node.

Step 7: RAN Node 1, RAN Node 2, and UE (or 'RAN Node 1 and UE', or 'RAN Node 1 and RAN Node 2') perform an action based on the output data. For example, in the case of load balancing operation, the UE may move from RAN node 1 to RAN node 2.

Step 8: RAN Node 1 and RAN Node 2 transmit feedback information to the network node.

FIG. 18 illustrates an application of a functional framework in a wireless communication system.

FIG. 18 illustrates a case where both the AI Model Training function and the AI Model Inference function are performed by a RAN node (e.g., base station, TRP, CU of the base station, etc.).

Step 1: The UE and RAN Node 2 transmit input data (i.e., Training data) for AI Model Training to RAN Node 1.

Step 2: RAN Node 1 trains the AI Model using the received training data.

Step 3: RAN Node 1 receives input data (i.e., Inference data) for AI Model Inference from the UE and RAN Node 2.

Step 4: RAN Node 1 performs AI Model Inference using the received Inference data to generate output data (e.g., prediction or decision).

Step 5: RAN Node 1, RAN Node 2, and the UE (or 'RAN Node 1 and UE', or 'RAN Node 1 and RAN Node 2') perform an action based on the output data. For example, in the case of load balancing operation, the UE may move from RAN node 1 to RAN node 2.

Step 6: RAN node 2 transmits feedback information to RAN node 1.

FIG. 19 illustrates an application of a functional framework in a wireless communication system.

FIG. 19 illustrates a case where the AI Model Training function is performed by a RAN node (e.g., base station, TRP, CU of the base station, etc.), and the AI Model Inference function is performed by the UE.

Step 1: The UE transmits input data (i.e., Training data) for AI Model Training to the RAN node. Here, the RAN node may collect data (e.g., measurements of the UE related to RSRP, RSRQ, SINR of the serving cell and neighboring cells, location of the UE, speed, etc.) from various UEs and/or from other RAN nodes.

Step 2: The RAN node trains the AI Model using the received training data.

Step 3: The RAN node distributes/updates the AI Model to the UE. The UE may continue to perform model training based on the received AI Model.

Step 4: The UE receives input data (i.e., Inference data) for AI Model Inference from the RAN node (and/or from other UEs).

Step 5: The UE performs AI Model Inference using the received Inference data to generate output data (e.g., prediction or decision).

Step 6: If applicable, the UE may transmit model performance feedback to the RAN node.

Step 7: The UE and the RAN node perform an action based on output data.

Step 8: The UE transmits feedback information to the RAN node.

1-dimensional/2-dimensional convolutional neural network structure

The convolutional neural network (CNN) structure is a structure that can demonstrate good performance in the field of image processing, and based on these characteristics, methods for improving performance by applying the CNN structure to channel estimation in wireless communication systems are being actively discussed. As examples of such CNN structures, a 1-dimensional (1D) CNN structure and a 2D CNN structure may be considered.

First, a 1D CNN structure will be described.

FIG. 20 illustrates a 1D CNN structure for AI/ML-based channel estimation in a wireless communication system to which this disclosure may be applied.

Referring to FIG. 20, when based on a 1D CNN structure, it is assumed that channel estimation in the frequency domain and channel estimation in the time domain are performed separately. For example, channel estimation in the time domain may be performed after channel estimation in the frequency domain (e.g., 1D Wiener filter).

FIG. 20 illustrates a method for configuring each layer of a CNN from channel estimate values (e.g., x0+jy0, ...) in the frequency domain. In FIG. 20, real values are exemplified, but it is obvious that the same may be applied to imaginary values. In addition, although the channel estimate value in the frequency domain is exemplified, it is obvious that the same may be applied to the channel estimate value in the time domain.

For example, as shown in FIG. 20, the input layer 2010 of the CNN may be configured based on the channel estimate value (e.g., a real number among the channel estimate values). In relation to the channel estimate value, the shaded area 2005 may mean an area where DMRS is transmitted. Between the input layer 2010 and the output layer 2030, N convolution layers/hidden layers 2020 (e.g., N is a natural number greater than or equal to 1) may be configured. At this time, the output layer 2030 may be configured from the result of the convolution layer/hidden layer 2020.

FIG. 21 illustrates an output value estimation method in a 1D CNN structure for AI/ML-based channel estimation in a wireless communication system to which the present disclosure may be applied.

Referring to FIG. 21, a feature map 2120 may be derived from an input value 2110 in each convolutional layer/hidden layer constituting a 1D CNN, and an output value 2130 may be estimated.

For example, the operation of deriving the feature map 2120 in each convolutional layer/hidden layer may correspond to [S2110-a, S2110-b, S2110-c, ...], and the operation of estimating the output value 2130 based on the feature map 2120 may correspond to [S2120].

In each convolutional layer/hidden layer, a kernel/filter 2140 that applies a specific weight to the input value of a specific unit may be defined in order to derive the feature map 2120. Each kernel/filter 2140 may be defined with a specific size (or number of weights). Additionally, each kernel/filter 2140 may be defined as a combination of specific weights (e.g., w0/w1/w2/w3). Each kernel/filter 2140 may have a specific movement range for deriving a feature map 2120 within the input value 2110, and the corresponding specific movement range may be named a stride. Additionally, the kernel/filter 2140 may be defined differently for each convolution layer/hidden layer, or may be defined the same for all convolution layers/hidden layers. FIG. 21 shows an example of a convolutional layer/hidden layer consisting of one kernel/filter 2140 configured/defined to size 4 and stride 1.

In each convolutional layer/hidden layer, an activation function (AF) 2150 used to estimate the output value based on the feature map 2120 may be defined. An activation function 2150 may be used to add non-linearity to the feature map 2120 obtained through a convolution operation. For example, the activation function 2150 may include a step function, sigmoid function, hyperbolic tangent function, ReLU function, Leaky ReLU function, softmax function, or the like.

Next, a 2D CNN structure will be described.

FIG. 22 illustrates a 2D CNN structure for AI/ML-based channel estimation in a wireless communication system to which the present disclosure may be applied.

Referring to FIG. 22, when based on a 2D CNN structure, it is assumed that channel estimation in the frequency domain and channel estimation in the time domain are performed together. For example, channel estimation in the frequency domain and channel estimation in the time domain may be performed simultaneously (e.g., 2D Wiener filter).

FIG. 22 illustrates a method for configuring each layer of a CNN from channel estimate values (e.g., x0+jy0, ...) in the frequency domain. In FIG. 22, real values are exemplified, but it is obvious that the same may be applied to imaginary values.

The method of configuring each layer of the 2D CNN structure in FIG. 22 is an extension of the method of configuring each layer of the 1D CNN structure in FIG. 20 to the two-dimensional time/frequency domain, and other configuration methods may be assumed to be the same.

For example, as shown in FIG. 22, the input layer 2210 of the CNN may be configured based on the channel estimate value (e.g., a real number among the channel estimate values). In relation to the channel estimate value, the shaded area 2205 may mean an area where DMRS is transmitted. Between the input layer 2210 and the output layer 2230, N convolution layers/hidden layers 2220 (e.g., N is a natural number greater than or equal to 1) may be configured. At this time, the output layer 2230 may be configured from the result of the convolution layer/hidden layer 2220.

FIG. 23 illustrates an output value estimation method in a 2D CNN structure for AI/ML-based channel estimation in a wireless communication system to which the present disclosure may be applied.

Referring to FIG. 23, a feature map 2320 may be derived from an input value 2310 in each convolutional layer/hidden layer constituting a 2D CNN, and an output value 2330 may be estimated.

The method for estimating the output value in FIG. 23 is an extension of the method for estimating the output value in FIG. 20 to the two-dimensional time/frequency domain, and other methods can be assumed to be the same.

For example, the operation of deriving the feature map 2320 in each convolutional layer/hidden layer may correspond to [S2310-a, S2310-b, S2310-c, ...], and the operation of estimating the output value 2330 based on the feature map 2320 may correspond to [S2320].

In each convolutional layer/hidden layer, a kernel/filter 2340 that applies a specific weight to the input value of a specific unit may be defined in order to derive the feature map 2320. Each kernel/filter 2340 may be defined with a specific size (or number of weights). In this case, the specific size may be defined based on two dimensions (e.g., two-dimensional time/frequency domain). Additionally, each kernel/filter 2340 may be defined as a combination of specific weights (e.g., w00/w10/w20/w30/w01/w11/w21/w31). Each kernel/filter 2340 may have a specific movement range for deriving a feature map 2320 within the input value 2310, and the corresponding specific movement range may be named a stride. In this case, the stride may be defined based on two dimensions (e.g., two-dimensional time/frequency domain). Additionally, the kernel/filter 2340 may be defined differently for each convolution layer/hidden layer, or may be defined the same for all convolution layers/hidden layers. FIG. 23 shows an example of a convolutional layer/hidden layer consisting of one kernel/filter 2340 configured/defined with size 4x2 and stride [1, 1] (e.g., [time domain, frequency domain]).

In each convolutional layer/hidden layer, an activation function (AF) 2350 used to estimate the output value based on the feature map 2320 may be defined. An activation function 2350 may be used to add non-linearity to the feature map 2320 obtained through a convolution operation. For example, the activation function 2150 may include a step function, sigmoid function, hyperbolic tangent function, ReLU function, Leaky ReLU function, softmax function, or the like.

In relation to the above-described 1D CNN structure and 2D CNN structure, functions/operations/structures for padding and pooling within the structure may be considered together.

FIG. 24 illustrates AI/ML-based channel estimation with padding and pooling in a CNN structure in a wireless communication system to which the present disclosure may be applied. Specifically, FIG. 24(a) illustrates a padding method, and FIG. 24(b) illustrates a pooling method.

Referring to FIG. 24(a), the feature map 2420 obtained as a result of the convolution operation is smaller in size than the input 2410, and a padding method can be used to prevent this. In other words, the padding method may refer to a function/operation/structure that ensures that the size of the feature map 2420 remains the same as the size of the input 2410 even after the convolution operation. FIG. 24(a) shows an example of applying zero padding in a 1D CNN structure.

Referring to FIG. 24(b), the pooling (or pooling layer) 2440 may refer to a function/operation/structure that reduces the size of the feature map 2420 by downsampling the feature map 2420. Examples of pooling operations include max pooling, average pooling, etc. FIG. 24(b) shows an example of applying max pooling in a 1D CNN structure. The same concepts of kernel and stride may be applied to pooling operations, and in this example, a kernel of size 4 and a stride set to 4 are assumed.

In relation to the above-described 1D CNN structure and 2D CNN structure, the description of bias has been omitted, but it is obvious that a bias value may be applied in relation to the corresponding CNN structure. When a bias value is used, the bias value may be applied as an addition to a specific feature map to which the kernel is applied.

Additionally, with regard to the 1D CNN structure and 2D CNN structure described above, although the description of the loss function and optimizer has been omitted, it is obvious that the loss function and optimizer may be considered for the training process within the CNN structure (or AI/ML algorithm). Here, the loss function may refer to a function that quantifies the difference between the actual value and the predicted value. As a loss function, mean square error (MSE), cross-entropy, etc. may be considered. The optimizer may refer to a function for updating weight(s) appropriate for each layer based on the loss function. Batch gradient descent, stochastic gradient descent (SGD), moni-batch gradient descent, momentum, and adagrad, RMSprop, Adam, etc. may be considered as optimizers.

Method for sharing AI/ML related parameters between base station and UE

In the present disclosure, the description is based on the 3GPP NR system, but this is not a limitation, and it is obvious that the invention technology may be applied to other communication systems.

If information related to the AI/ML model and/or the parameter(s) required for the model is configured/defined to be shared between the base station and the UE, there is an advantage that training may be performed only at a specific node among the base station or terminal. As an example, a method of calculating errors from predicted values and actual values based on a data set for training at a specific node and updating the parameter(s) required for inference, such as weights and biases, may be applied.

Additionally, by sharing updated parameter(s) with a node that does not perform training, the inference performance of that node may be improved. As an example, when training results/information (e.g., weights, bias, etc.) may be shared, since the above-described update process (e.g., weight/bias update using loss function/optimizer) is unnecessary at a specific node, it has the advantage of reducing the computational complexity and energy consumption of the node and improving inference performance.

Considering this, the present disclosure proposes methods for exchanging the above-described AI/ML model and information related thereto between a base station and a UE. The proposed method in the present disclosure is proposed/described focusing on the CNN structure, but is not limited to the CNN structure. Therefore, it is clear that information exchange assuming other NN structures other than the CNN structure is possible based on the operating method/principle/structure of the proposed method.

In relation to the proposed method in the present disclosure, the above-described 1D CNN structure and 2D CNN structure are examples of structures mainly considered in the proposed method in the present disclosure, and are not intended to limit the proposed method, so specific functions/operations are not limited by specific terms. In other words, the above-described function/operation/method is not limited to a specific term and may be replaced by another term.

In relation to the 1D CNN structure and 2D CNN structure described above, the size expressed in the drawings (e.g., FIGS. 20 to 24) (e.g., size of input/input layer, size of output/output layer, size of convolution layer/hidden layer, size of kernel, etc.) corresponds to an example and is not suggested, since it does not limit the method, the method proposed in the present disclosure may be applied to other sizes as well.

In the present disclosure, L1 signaling may mean DCI-based dynamic signaling between the base station and the UE, and L2 signaling may refer to RRC/MAC-CE based higher layer signaling between the base station and the UE.

Specifically, the present disclosure proposes methods for using the above-described 1D/2D CNN structure in a channel estimation process in a base station and/or UE. For example, the base station and/or UE may transmit a reference signal for channel estimation, and the base station and/or UE may estimate the (wireless) channel based on the reference signal. In addition, when estimating the channel, using an AI/ML model (e.g., CNN structure), channel estimation performance for resource areas (e.g., RE(s), RB(s), OFDM symbol(s), etc.) where reference signals are not transmitted and/or channel estimation performance for resource areas where reference signals are transmitted may be be improved.s

When applying the method proposed in the present disclosure, information on the AI/ML algorithm, NN structure, and parameter(s) related thereto may be shared between the base station and the UE. Through this, the training process at the base station and/or UE may be omitted, which has the effect of reducing the complexity and energy consumption required for the learning process.

As previously mentioned, the proposed method in the present disclosure may be proposed/described based on CNN structure and channel estimation operation, but may also be applied to AI/ML algorithms and/or NN structures other than CNN structure, and may also be applied to purposes such as CSI feedback/positioning/beam management/channel prediction.

The present disclosure proposes a method for sharing AI/ML-related information between a base station and a UE. As an example, AI/ML-related information may include AI/ML-related algorithms, NN structure, and parameter(s) related thereto.

The proposed method in the present disclosure is explained using the case of sharing NN structure information as an example, but may be extended and applied to cases of sharing AI/ML-related information other than NN structure information.

For example, the UE may report the UE's NN structure information and/or the NN structure information assumed by the UE to the base station (or network side). Additionally/alternatively, the base station (or network side) may configure/indicate the UE about the NN structure information of the base station, the NN structure information assumed by the base station, and/or the NN structure information assumed by the UE. Additionally/alternatively, rules may be defined to assume specific NN structure information between the base station and the UE.

In this example, NN structure information may include information related to specific operations such as layer-related information and padding/pooling in the corresponding structure. Specifically, NN structure information may include the number of convolution layers/hidden layers, presence of padding, padding value, padding size, presence of pooling, pooling type, etc. Here, the number of convolutional layers/hidden layers may be defined including an input layer and/or an output layer. In addition, the above-described presence of padding, padding value, padding size, presence of pooling, pooling type, etc. may be configured/indicated/defined/reported for the entire layer, each layer, and/or a specific layer, respectively.

Additionally, NN structure information may include kernel-related information, information on the type of loss function, and information on the type of optimizer. Specifically, kernel-related information may include the number of kernels, the size of the kernel (e.g., 1D, 2D), the activation function of each layer/kernel, the stride value of each layer/kernel, the weight values of the kernel (or a combination of weight values), bias values of each layer/kernel, etc. Parameters/variables in the kernel-related information may be configured/indicated/defined/reported for the entire layer, each layer, a specific layer, the entire kernel, each kernel, and/or a specific kernel, respectively.

With regard to examples of specific information included in the above-described NN structure information, some information, a combination of some information, and/or all information may be reported/configured/indicated/defined. According to the proposed method described above and the method(s) to be described below, when the base station configures/indicates the UE the NN structure information of the base station (or the NN structure information assumed by the base station, the NN structure information assumed by the UE), NN structure information may be configured/indicated based on L1 signaling and/or L2 signaling. Additionally, according to the proposed method described above and the method(s) to be described below, when a UE reports its NN structure information (or NN structure information assumed by the UE) to the base station, NN structure information may be reported based on UE capability reporting and/or CSI reporting.

When using the method proposed in the present disclosure described above, a specific node (e.g., base station or UE) may calculate the error from the predicted value and the actual value based on training and update the weight/bias, etc. When training results/information (e.g., weights, biases, etc.) may be shared, the above-described training/updating process is unnecessary in certain nodes, and accordingly, computational complexity and energy consumption at the corresponding node may be reduced.

In relation to the method proposed in this disclosure, a method of applying the following elements together/substituted may also be considered. Additionally, a method of applying the following elements together/ substituted of specific embodiments (e.g., Embodiments 1 to 3) of the present disclosure may also be considered.

First, AI/ML algorithm elements may be considered.

One or more AI/ML algorithms/models (e.g., DNN, CNN, RNN, RN, etc.) may be considered/applied. At this time, the base station/network (network, NW) may configure/indicate information related to the AI/ML algorithm/model to the UE. Here, the information may include information on the type/model of the AI/ML algorithm, the number of nodes, the number of hidden layers, and the number of weights. AI/ML algorithms/models may be configured on a module basis, that is, AI/ML algorithms/models may be configureds for BM use, CSI use, positioning use, etc. In this case, for the AI/ML algorithm model, all functions are the same, but parameters (e.g. number of nodes/hidden layers/weights, etc.) may be configured differently.

Next, update elements of AI/ML-related parameters may be considered.

For example, when applying an AI/ML module to initial access, (D)NN-related information may be configured/indicated/delivered to the UE through system information (e.g., SIBx). On the other hand, if the AI/ML module is not applied to the initial connection, the (D)NN-related information may be configured/indicated/delivered to the UE through RRC/MAC-CE/DCI, etc. At this time, a certain time gap (X) may be applied to apply AI/ML related information/update information configured/indicated to the UE. Here, a certain time gap may be configured/defined as X slots/msec after receipt of (D)NN related information. Information on the certain time gap, that is, X, may be determined by UE capabilities or base station configurations.

Next, a reference UE element that has deep learning capabilities on its own may be considered. In order to perform efficient deep learning training, a 'reference UE' may be defined, and the necessary UE behavior may be defined.

It may be difficult for all terminals to have the ability to perform learning/training for a (D)NN, and may also cause inefficient learning/training. Therefore, a UE capable of performing the above-described learning/training (representing multiple terminals) (i.e., the reference UE) may be needed. When a reference UE is defined/introduced, learning/training is performed only on a specific UE, not on all base stations/UEs, and after a specific UE performs learning/training, the results may be shared with the base station and other UEs. Therefore, since there is no need to independently perform learning/training in all base stations/UEs (existing in similar/same channel situations), efficient learning/training may be performed. In addition, the results of learning/training (reflecting similar/same channel situations) may be shared with UEs that do not have the ability to perform learning/training, so that the UE also has the advantage of being able to operate based on (D)NN with appropriate parameters applied.

For example, the reference UE may correspond to a UE with the ability to perform running/learning, a UE configured/indicated (by a base station, etc.) to perform learning/training, and/or a UE configured/indicated to report/share/transmit results of learning/training to base station, etc./non-reference UE. Here, a non-reference UE may mean a UE that does not correspond to the above-mentioned reference UE.

In this regard, the UE may report information on its capabilities to the base station (or network), and the corresponding information may include information on the capability to learning/training the above-mentioned parameter(s) and/or sharing/broadcasting the parameter(s) derived for (D)NN to other UEs. The base station may configure/indicate the reference UE(s) through L1 signaling and/or L2 signaling. The reference UE may perform leanring/training on parameter(s) for the (D)NN and report the derived (D)NN related information (e.g., weight, etc.) to the base station (or network). Additionally, the reported (D)NN related information may be relayed/configured/indicated by the base station (or network) to other UEs (e.g., non-reference UEs). The reference UE may broadcast the derived (D)NN related information to its neighboring UEs (e.g., non-reference UEs). A non-reference UE may be configured/indicated to receive (D)NN related information derived from the reference UE. (D) Relevant parameter(s) (e.g., time/frequency resources, period, etc.) for reception of NN-related information may be configured/indicated by L1/L2 signaling from the base station (or network).

Hereinafter, more specific methods are proposed in relation to the method proposed in the present disclosure described above. The embodiments described below are divided for convenience of explanation, and methods corresponding to the embodiments may be applied individually, or methods in two or more embodiments may be applied in combination with each other.

Embodiment 1

In terms of the above-described AI/ML related information, the present disclosure relates to a method of configuring/indicating/defining/reporting a specific algorithm/model/structure when multiple AI/ML algorithms/models/structures are used.

For example, for NN structure information, multiple NN structures (or AI/ML algorithms/models) may be configured/defined in the form of a combination of multiple information. At this time, the base station and/or the UE may configure/indicate/define/report a specific structure among the plurality of NN structures.

Table 6 shows an example of a method for defining a candidate NN structure (NNS) based on the method proposed in this embodiment.

[Table 6]

| state | Neural Network Structure | # of CLs | # of KNs | size of KN | stride |
|---|---|---|---|---|---|
| 0 | NNS0 | 2 | (1,1) | (4,4) | 1 |
| 1 | NNS1 | 2 | (1,1) | (8,4) | 1 |
| 2 | NNS2 | 2 | (1,1) | (4,4) | 2 |
| 3 | NNS3 | 3 | (1,1,1) | (4,4,4) | 1 |
| 4 | NNS4 | 3 | (1,1,1) | (8,4,4) | 1 |
| 5 | NNS5 | 3 | (1,1,1) | (4,4,4) | 2 |
| 6 | NNS6 | 4 | (1,1,1,1) | (4,4,4,4) | 1 |
| 7 | NNS7 | 4 | (1,1,1,1) | (4,4,4,4) | 2 |

Referring to Table 6, each candidate NN structure may be configured/indicated/defined/reported in the form of an index (e.g., states 0 to 7). Each candidate NN structure may be defined/distinguished based on a combination of the number of convolution layers (CL), the number of kernels (KN) in each CL, the size of the kernel in each CL, and the stride of the kernel in each CL.

For example, the first NNS candidate (i.e., NNS0) and the second NNS candidate (i.e., NNS1) have different features in the size of KN in a specific CL, and because of this, the second NNS candidate has higher complexity compared to the first NNS candidate, but may be expected to provide high accuracy. When comparing the first NNS candidate (i.e. NNS0) and the third NNS candidate (i.e. NNS2), because the third NNS candidate has a large stride, the amount of computation may be reduced and complexity may be lowered, but it may be expected that there may be deterioration in performance.

Table 6 corresponds to an example of defining a combination of multiple information to define a candidate NN structure, and the method proposed in the present disclosure is not limited to the combination of the information. It is obvious that candidate NN structures may be defined based on combinations of different parameters. In addition, Table 6 illustrates a combination of a plurality of information, but together with or (partially) in place of this, and a method of configuring/indicating/defining/reporting each information independently between the base station and the UE is also possible.

In the case of configuring/indicating/defining/reporting a specific NN structure based on the proposed method in this embodiment and the proposed method to be described below, for specific NN structure information, a method of defining rules to assume a specific value between the base station and the UE may be considered. For example, a rule may be defined to assume zero padding in all layers to maintain the size of the input and output. Additionally/alternatively, a rule may be defined to assume a ReLU function or a Leaky ReLU function for the activation function.

When the base station configures/indicates the UE to set a specific NN structure based on the proposed method in this embodiment and the proposed method to be described below, information on the specific NN structure may be configured/indicated based on LI/L2 signaling. Additionally, when the UE reports a specific structure among multiple NN structures, information on that specific NN structure may be reported based on UE capability reporting and/or CSI reporting.

In configuring/indicating/reporting AI/ML-related information (e.g., NN structure information) between the base station and the UE, if each information is reported separately, signaling overhead may increase and the number of AI/ML models/structures to consider may increase. The proposed method in this embodiment may prevent the above-mentioned problem by defining the AI/ML model/structure in the form of a combination of specific AI/ML model/structure information, and may manage signaling overhead and AI/ML models/structures to be considered at an appropriate level.

Embodiment 2

This embodiment relates to a method of configuring/indicating/defining/reporting specific parameter values related to a specific AI/ML model/structure when the base station and/or UE may assume a specific AI/ML model/structure.

For example, based on the proposed method in the present disclosure and/or the above-described Embodiment 1 and the following proposed method, it is assumed that a specific NN structure is configured/indicated/defined/reported, and the base station/UE may assume the corresponding NN structure. At this time, the base station/UE may configure/indicate/define/report the weight values (or combination of weight values) of the kernel and/or the bias value of each layer/kernel.

In order to configure/indicate/define/report the weight values (or combination of weight values) of the kernel and/or the bias value of each layer/kernel based on the proposed method in this embodiment and the proposed method to be described below, at least one method among the examples below may be applied.

As an example, a combination of weight values and/or a bias value may be defined/configured as a fixed rule between the base station and the UE in the form of a plurality of states/indexes. Accordingly, the base station/UE may configure/indicate/report a specific state/index among a plurality of states/indexes.

As another example, for weight values and/or bias values, information on candidate values may be shared between the base station and the UE based on L2 signaling (e.g. RRC, MAC-CE, etc.). Specific value(s) among candidate values may be configured/indicated/reported to the base station/UE based on L1/L2 signaling. At this time, the operation of updating the candidate values with new candidate values may be supported based on L1/L2 signaling.

In the case of the proposed method in this embodiment, since the weight values and/or bias values that may be obtained as a result of performing the learning process only at specific nodes among the base stations/UEs are shared, the complexity of specific nodes may be reduced and energy efficiency may be improved.

Embodiment 3

This embodiment relates to a method for supporting flexible AI/ML related algorithms/models.

For example, in order to support a flexible NN structure in relation to the proposed methods described above in this disclosure, after defining a specific convolution layer (CL) structure based on a plurality of NN structure information, the base station/UE may configure/indicate/report information on the number of CLs that may be supported (or may be assumed). Here, the plurality of NN structure information may include the number of kernels (KN), size of the kernel, stride of the kernel, activation function, presence/value/size of padding, presence/type/method of polling, etc.

When defining CL based on the proposed method in this embodiment, the size/number of weight values (or combination of weight values) of the kernel required for the corresponding CL and/or bias values of each layer/kernel may be determined. Accordingly, the weight values (or combination of weight values) of the kernel and/or the bias values of each layer/kernel may be defined in the same format. In addition, the number of data in the same format may be determined depending on the number of CLs supported by the base station/UE, and through this, signaling between base stations/UEs may be efficiently defined.

For example, when [number of kernels, size of kernel, stride of kernel, activation function, padding presence/value/size, pooling presence/type/method] is defined/set as [1, 4, 1, ReLU function, zero padding, without pooling], since the kernel size is 4, 4 weights and 1 bias value may be required for each CL. If this is referred to as [w0, w1, w2, w3, b0], a method of configuring/defining single candidate combinations for all CLs and configuring/indicating/reporting specific combinations for each CL may be applied.

Table 7 shows an example of defining candidate combinations for configuring/indicating/reporting information on weight values/bias values.

[Table 7]

| state | w0 | w1 | w2 | w3 | b0 |
|---|---|---|---|---|---|
| 0 | 1 | 2 | 3 | 4 | 0 |
| 1 | 1 | 2 | 3 | 4 | 1 |
| 2 | 2 | 3 | 4 | 5 | 0 |
| 3 | 2 | 3 | 4 | 5 | 1 |
| 4 | 1 | 3 | 1 | 3 | 0 |
| 5 | 1 | 3 | 1 | 3 | 1 |
| 6 | 2 | 3 | 2 | 3 | 0 |
| 7 | 2 | 3 | 2 | 3 | 1 |

Referring to Table 7, eight states/indexes may be defined in relation to information on weight values/bias values. For example, if a specific base station/UE assumes/defines three CLs, in order to configure/indicate/report information on the weight value/bias value of each CL0/CL1/CL2, States/indexes (e.g., state0/state0/state3) for each CL may each be reported based on a single candidate combination.

Although the proposed methods described above in the present disclosure are explained assuming a 1D CNN structure, the methods may be equally/similarly extended and applied to a 2D CNN structure.

FIG. 25 is a diagram illustrating a signaling procedure between a base station and a UE for a method of reporting channel state information according to an embodiment of the present disclosure.

The example in FIG. 25 is for convenience of explanation and does not limit the scope of the present disclosure. Some step(s) illustrated in FIG. 25 may be omitted depending on the situation and/or setting. Additionally, the order of some step(s) illustrated in FIG. 25 may be changed. Additionally, the base station and UE in FIG. 25 are just one example and may be implemented with the device illustrated in FIG. 28 below. For example, the processors 102/202 of FIG. 28 may control transmission and reception of channels/signals/data/information, etc. using the transceivers 106/206, and may also control to store transmitted or received channels/signals/data/information, etc. in the memory 104/204. Additionally, the base station in FIG. 25 may refer to a network-level device.

In addition, in the operation between the base station and the UE in FIG. 25, even if there is no separate mention, the method proposed in the present disclosure described above (e.g., the AI/ML-related information sharing method described above and Embodiments 1 to 3, etc.) may be referenced/used. Although FIG. 25 shows the DNN structure as an example, the signaling described in FIG. 25 may be extended and applied to sharing and application of information related to AI/ML algorithms and/or DNN/NN structures.

In step S005, the UE may transmit/report the capability information of the corresponding UE to the base station. For example, the UE may report capability information related to the method proposed in the present disclosure (e.g., the above-described AI/ML-related information sharing method and Embodiments 1 to 3, etc.).

In step S010, the base station may perform (pre) training for the DNN. The base station may obtain information on the parameter(s) required for the AI/ML algorithm and/or DNN/NN structure based on the learning process. For example, based on the process, the base station may obtain parameter(s) related to the method proposed in the present disclosure (e.g., the above-described AI/ML-related information sharing method and Embodiments 1 to 3, etc.).

In step S015, the base station may configure/indicate the UE on information related to the AI/ML algorithm and/or DNN/NN structure. The base station may configure/indicate the UE on information on the parameter(s) obtained in step S010. For example, at this stage, parameter(s) related to the method proposed in the present disclosure (e.g., the above-described AI/ML-related information sharing method and Embodiments 1 to 3, etc.) may be configured/indicated to the UE.

In step S020, the base station may apply a DNN structure based on the AI/ML algorithm and/or DNN/NN structure shared with the UE. For example, the base station may apply DNN to compress the DL channel and/or Reference Signal (RS) and transmit them to the UE.

In step S025, the base station may transmit a DL channel and/or RS to the UE. As described above, for example, when the base station transmits a DL channel and/or RS to the UE, AI/ML algorithms and/or DNN/NN structures shared with the UE may be applied.

In step S030, the UE may apply the DNN shared from the base station to the DL channel and/or RS. For example, the UE may decompress the DL channel and/or RS or estimate/predict the DL channel and/or RS based on the AI/ML algorithm and/or DNN/NN structure pre-configured by the base station.

In step S035, the UE may adjust DNN parameters based on the DL channel and/or RS. For example, the UE may perform training based on the DL channel and/or RS, and adjust DNN parameters based on the training results.

In step S040, the UE may perform CSI reporting or transmit a UL channel and/or RS. For example, the UE may perform CSI reporting on the training results in step S035. In this case, the UE may apply DNN to compress CSI. Additionally/alternatively, the UE may apply DNN to compress the UL channel and/or RS and transmit them to the base station.

In step S045, the base station may apply DNN for CSI reporting, UL channel, and/or RS. For example, based on the AI/ML algorithm and/or DNN/NN structure already shared with the UE, the base station may decompress the CSI report, UL channel, and/or RS, or estimate/predict the CSI report, UL channel, and/or RS.

In step S050, the base station may tune DNN parameters based on CSI reporting, UL channel, and/or RS. For example, the base station may perform training based on the UL channel and/or RS, and adjust DNN parameters based on the training results. Additionally/alternatively, the base station may adjust the DNN parameters based on the UE's reported values.

In step S055, the base station may configure/indicate the UE to perform an update on the parameter(s) for the AI/ML algorithm and/or DNN/NN structure. For example, the UE may adjust/update DNN parameters based on the update configuration/indication of the corresponding base station.

In step S060, the UE may adjust DNN parameters. For example, as in the update configuration/indication in step S055 above, the UE may adjust DNN parameters based on the value(s) configured/indicated by the base station based on L1/L2 signaling.

FIG. 26 is a diagram illustrating the operation of a UE for a method for reporting channel state information according to an embodiment of the present disclosure.

FIG. 26 illustrates an operation of the UE based on one or more of the previously proposed methods (e.g., the above-described AI/ML-related information sharing method, Embodiment 1, Embodiment 2, Embodiment 3, and detailed embodiments thereof (detailed) combination of embodiments). The example in FIG. 26 is for convenience of explanation and does not limit the scope of the present disclosure. Some step(s) illustrated in FIG. 26 may be omitted depending on the situation and/or setting. Additionally, the UE in FIG. 26 is only an example and may be implemented as a device illustrated in FIG. 28 below. For example, the processors 102/202 of FIG. 28 may control transmission and reception of channels/signals/data/information, etc. using the transceivers 106/206, and may also control to store transmitted or received channels/signals/data/information, etc. in the memory 104/204.

Additionally, the operations of FIG. 26 may be processed by one or more processors 102, 202 of FIG. 28, and the operation of FIG. 26 is stored in memory (e.g., one or more memories 104, 204 of FIG. 28) in the form of instructions/programs (e.g. instructions, executable code) for driving at least one processor (e.g., 102, 202) of FIG. 28.

Referring to FIG. 26, in step S2610, the UE may receive information on the learning algorithm. Here, the learning algorithm may include AI/ML algorithms and/or (D)NN structures related to CSI reporting. The information may be transmitted by a network device (e.g., a base station and/or AI/ML-related server device, etc.).

As described above in the present disclosure, information on the learning algorithm may include information on the type/model of the corresponding learning algorithm (e.g., identification information/number of the type/model of the learning algorithm), operation-related parameters for the corresponding learning algorithm, etc. For example, the operation-related parameter may include at least one of the number of nodes, the number of hidden layers, or a weight value related to the learning algorithm.

Additionally, as described above in the present disclosure, for example, if the learning algorithm corresponds to a convolution neural network, the operation-related parameters may include at least one of the number of convolution layers, padding-related information, pooling-related information, or kernel-related information.

At this time, the information on the learning algorithm may be information about a specific candidate neural network structure among a plurality of predefined candidate neural network structures, and it may be indicated by an index/state indicating the specific candidate neural network structure among a plurality of indices/states. Here, the plurality of indices may be configured based on a combination of at least two of the number of convolutional layers, the number of kernels, the size of the kernel, or the stride value for the kernel (e.g., Table 6). Additionally, when a specific candidate neural network structure is configured/indicated, the UE may receive information on weight values and bias values in a specific candidate neural network structure. In this case, the information may be transmitted and received through RRC settings/MAC-CE/DCI, etc.

In step S2620, the UE may receive at least one reference signal for CSI reporting. The information may be transmitted by a network device (e.g., base station, etc.). For example, at least one reference signal may be transmitted and received by being compressed and/or optimized based on the above-described learning algorithm.

In step S2630, the UE may perform channel estimation based on at least one reference signal in step S2620 and information on the learning algorithm in step S2610.

For example, the UE may perform measurement of a reference signal and channel estimation accordingly based on AI/ML-related parameters configured/indicated by a base station, etc. When the UE performs channel estimation, the UE applies the learning algorithm to decompress the at least one reference signal, and it may also be configured to perform channel measurement based on the at least one decompressed reference signal.

In step S2640, the UE may transmit/report CSI to (a network device (e.g., base station, etc.)) based on the result of the channel estimation described above.

Additionally, although not shown in FIG. 26, the UE may report its capability information (to a network device (e.g., base station, etc.)). For example, the capability information may include information indicating whether the corresponding UE supports training based on the above-described learning algorithm (e.g., whether it is a reference UE). If the UE supports training based on the learning algorithm, the UE may transmit information on the training results to the base station and/or other UEs.

In addition, although not shown in FIG. 26, the UE may receive update information (from a network device (e.g., base station and/or AI/ML related server, etc.)) indicating an update to the above-described learning algorithm. As an example, the update may be configured/defined to be performed after a pre-configured interval (e.g., the pre-configured section may be configured based on UE capability information and/or base station configurations.

FIG. 27 is a diagram illustrating the operation of a network device for a method for reporting channel state information according to an embodiment of the present disclosure.

FIG. 27 illustrates an operation of the network device (e.g., a base station and/or AI/ML-related server, etc.) based on one or more of the previously proposed methods (e.g., the above-described AI/ML-related information sharing method, Embodiment 1, Embodiment 2, Embodiment 3, and detailed embodiments thereof (detailed) combination of embodiments). The example in FIG. 27 is for convenience of explanation and does not limit the scope of the present disclosure. Some step(s) illustrated in FIG. 27 may be omitted depending on the situation and/or setting. Additionally, the network device in FIG. 27 is only an example and may be implemented as a device illustrated in FIG. 28 below. For example, the processors 102/202 of FIG. 28 may control transmission and reception of channels/signals/data/information, etc. using the transceivers 106/206, and may also control to store transmitted or received channels/signals/data/information, etc. in the memory 104/204.

Additionally, the operations of FIG. 27 may be processed by one or more processors 102, 202 of FIG. 28, and the operation of FIG. 27 is stored in memory (e.g., one or more memories 104, 204 of FIG. 28) in the form of instructions/programs (e.g. instructions, executable code) for driving at least one processor (e.g., 102, 202) of FIG. 28.

Referring to FIG. 27, in step S2710, the network device may transmit (to the UE) information on the learning algorithm. Here, the learning algorithm may include AI/ML algorithms and/or (D)NN structures related to CSI reporting.

As described above in the present disclosure, information on the learning algorithm may include information on the type/model of the corresponding learning algorithm (e.g., identification information/number of the type/model of the learning algorithm), operation-related parameters for the corresponding learning algorithm, etc. For example, the operation-related parameter may include at least one of the number of nodes, the number of hidden layers, or a weight value related to the learning algorithm.

Additionally, as described above in the present disclosure, for example, if the learning algorithm corresponds to a convolution neural network, the operation-related parameters may include at least one of the number of convolution layers, padding-related information, pooling-related information, or kernel-related information.

At this time, the information on the learning algorithm may be information about a specific candidate neural network structure among a plurality of predefined candidate neural network structures, and it may be indicated by an index/state indicating the specific candidate neural network structure among a plurality of indices/states. Here, the plurality of indices may be configured based on a combination of at least two of the number of convolutional layers, the number of kernels, the size of the kernel, or the stride value for the kernel (e.g., Table 6). Additionally, when a specific candidate neural network structure is configured/indicated, the UE may receive information on weight values and bias values in a specific candidate neural network structure. In this case, the information may be transmitted and received through RRC settings/MAC-CE/DCI, etc.

In step S2720, the network device may transmit (to the UE) at least one reference signal for CSI reporting. For example, at least one reference signal may be transmitted and received by being compressed and/or optimized based on the above-described learning algorithm.

In step S2730, the network device may receive (from the UE) CSI by channel estimation based on at least one reference signal in step S2720 and information on the learning algorithm in step S2710.

For example, measurement of a reference signal and channel estimation may be performed (by the UE) based on AI/ML-related parameters configured/indicated by a base station, etc. When performing channel estimation, an operation of applying the learning algorithm to decompress the at least one reference signal and performing channel measurement based on the decompressed at least one reference signal may be applied.

Additionally, although not shown in FIG. 27, the network device may receive (from the UE) UE's capability information. For example, the capability information may include information indicating whether the corresponding UE supports training based on the above-described learning algorithm (e.g., whether it is a reference UE). If the UE supports training based on the learning algorithm, the UE may transmit information on the training results to the base station and/or other UEs.

In addition, although not shown in FIG. 27, the network device may transmit (to the UE) update information indicating an update to the above-described learning algorithm. As an example, the corresponding update may be configured/defined to be performed after a pre-configured interval (e.g., X symbol/msec) based on a reception timing of the update information. The pre-configured interval may be configured based on UE capability information and/or base station configurations.

## General Device to which the Present Disclosure may be applied

FIG. 28 illustrates a block diagram of a wireless communication device according to an embodiment of the present disclosure.

In reference to FIG. 28, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device XXX, YYY of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device XXX, YYY of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method for performing channel state information (CSI) reporting by a user equipment (UE) in a wireless communication system, the method comprising:

   receiving information on a learning algorithm related to the CSI report;
   receiving at least one reference signal for the CSI reporting;
   performing channel estimation based on the at least one reference signal and the information; and
   transmitting CSI based on a result of the channel estimation,
   wherein the information includes at least one of identification information for a type or model of the learning algorithm or an operation-related parameter for the learning algorithm.

2. The method of claim 1,
   wherein the operation-related parameter includes at least one of a number of nodes related to the learning algorithm, a number of hidden layers, or a weight value.

**3.** The method of claim 1, further comprising:

reporting capability information of the UE,
wherein the capability information includes information on whether the UE supports training based on the learning algorithm.

**4.** The method of claim 1, further comprising:
based on the UE supporting training based on the learning algorithm, transmitting information on a result of the training to at least one of a base station or another UE.

**5.** The method of claim 1,
wherein the performing the channel estimation comprises:

decompressing the at least one reference signal by applying the learning algorithm; and
performing channel measurement based on the decompressed at least one reference signal.

**6.** The method of claim 1, further comprising:

receiving update information indicating an update to the learning algorithm,
wherein the update is performed after a pre-configured interval based on a reception timing of the update information, and
wherein the pre-configured interval is configured based on at least one of UE capability information and base station configuration.

**7.** The method of claim 1,

wherein, based on the learning algorithm corresponding to a convolution neural network,
the operation-related parameter includes at least one of a number of convolution layers, padding-related information, pooling-related information, or kernel-related information.

**8.** The method of claim 7,

wherein the information is related to a specific candidate neural network structure among a plurality of predefined candidate neural network structures, and
wherein the information is indicated by an index indicating the specific candidate neural network structure among a plurality of indices.

**9.** The method of claim 8,
wherein the plurality of indices are configured based on a combination of at least two of the number of convolutional layers, a number of kernels, a size of a kernel, or a stride value for a kernel.

**10.** The method of claim 8, further comprising:

receiving information on a weight value and information on a bias value in the specific candidate neural network structure,
wherein the information on the weight value and the information on the bias value are received through at least one of a radio resource control (RRC) configuration, a medium access control-control element (MAC-CE), or downlink control information (DCI).

**11.** A user equipment (UE) for performing channel state information (CSI) reporting in a wireless communication system, the UE comprising:

at least one transceiver; and
at least one processor coupled with the at least one transceiver,
wherein the at least one processor is configured to:

receive information on a learning algorithm related to the CSI report;
receive at least one reference signal for the CSI reporting;
perform channel estimation based on the at least one reference signal and the information; and
transmit CSI based on a result of the channel estimation,
wherein the information includes at least one of identification information for a type or model of the learning algorithm or an operation-related parameter for the learning algorithm.

**12.** A method for receiving channel state information (CSI) reporting by a base station in a wireless communication system, the method comprising:

transmitting information on a learning algorithm related to the CSI report;
transmitting at least one reference signal for the CSI reporting; and
receiving CSI according to channel estimation based on the at least one reference signal and the information,
wherein the information includes at least one of identification information for a type or model of the learning algorithm or an operation-related parameter for the learning algorithm.

**13.** A base station for receiving channel state information (CSI) reporting in a wireless communication system, the base station comprising:

at least one transceiver; and
at least one processor coupled with the at least one transceiver,
wherein the at least one processor is configured to:

transmit information on a learning algorithm related to the CSI report;
transmit at least one reference signal for the CSI reporting; and
receive CSI according to channel estimation based on the at least one reference signal and the information,
wherein the information includes at least one of identification information for a type or model of the learning algorithm or an operation-related parameter for the learning algorithm.

**14.** A processing apparatus configured to control a terminal to perform channel state information (CSI) reporting in a wireless communication system, the processing apparatus comprising:

at least one processor; and
at least one computer memory operably connected to the at least one processor and storing instructions that, based on being executed by the at least one processor, perform operations,
wherein the operations include:

receiving information on a learning algorithm related to the CSI report;
receiving at least one reference signal for the CSI reporting;
performing channel estimation based on the at least one reference signal and the information; and
transmitting CSI based on a result of the channel estimation,
wherein the information includes at least one of identification information for a type or model of the learning algorithm or an operation-related parameter for the learning algorithm.

**15.** At least one non-transitory computer-readable medium storing at least one instruction, wherein:
the at least one instruction executable by at least one processor controls a device performing channel state information (CSI) reporting in a wireless communication system to:

receive information on a learning algorithm related to the CSI report;
receive at least one reference signal for the CSI reporting;
perform channel estimation based on the at least one reference signal and the information; and
transmit CSI based on a result of the channel estimation,
wherein the information includes at least one of identification information for a type or model of the learning algorithm or an operation-related parameter for the learning algorithm.

FIG.1

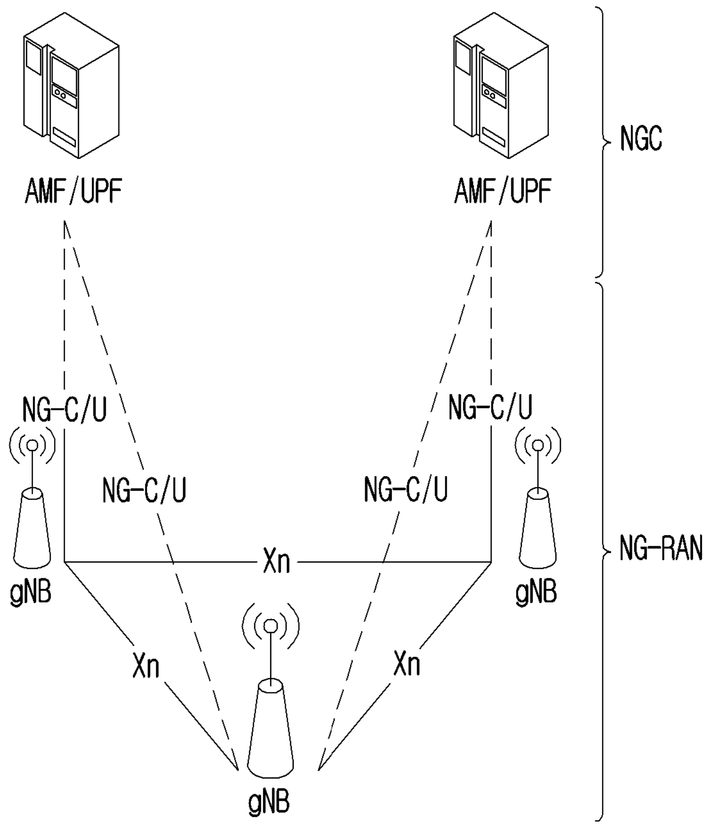
AMF/UPF
AMF/UPF
NGC
NG-C/U
NG-C/U
NG-C/U
NG-C/U
Xn
Xn
Xn
gNB
gNB
gNB
NG-RAN

FIG.2

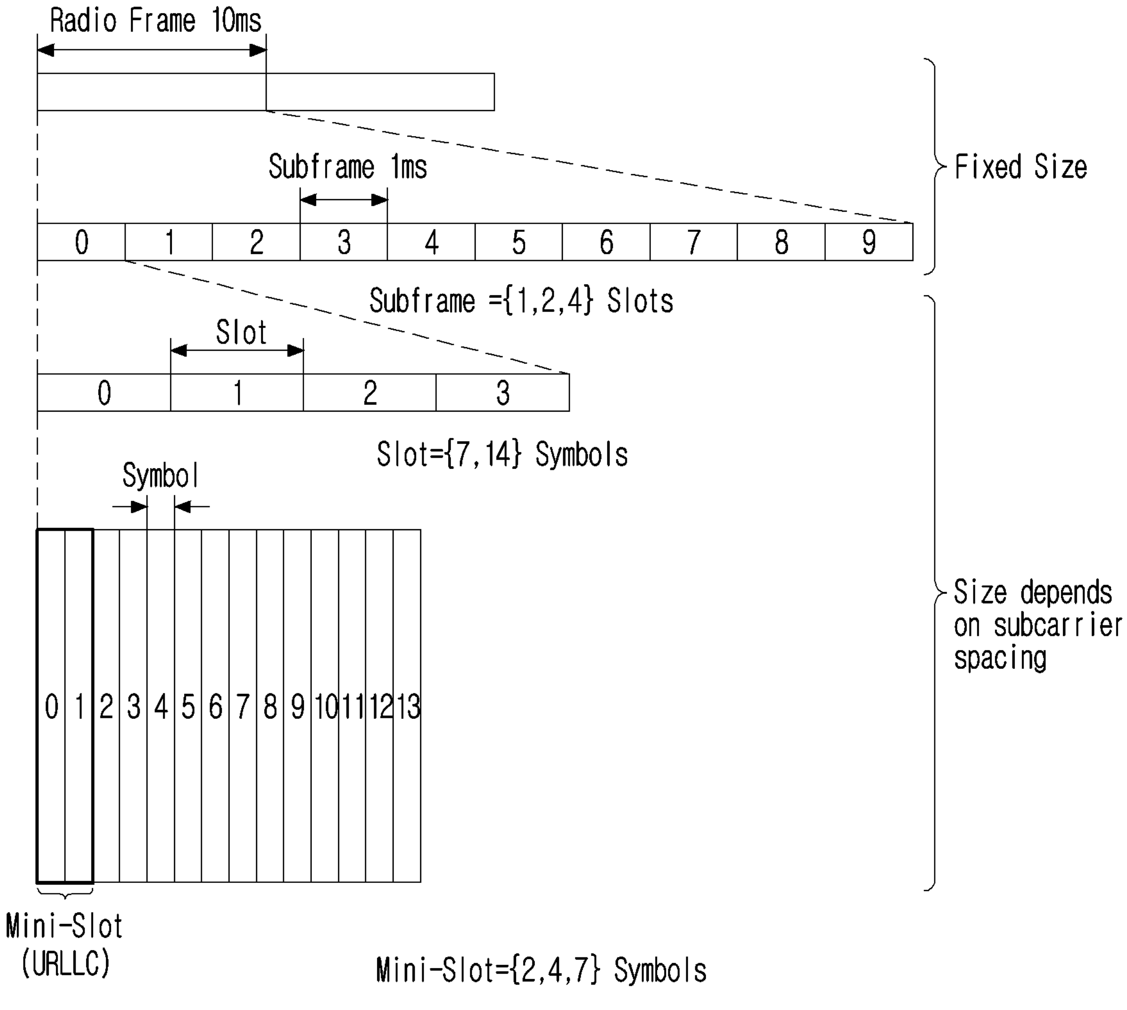
Radio Frame 10ms
Fixed Size
Subframe 1ms
0 1 2 3 4 5 6 7 8 9
Subframe ={1,2,4} Slots
Slot
0 1 2 3
Slot={7,14} Symbols
Symbol
0 1 2 3 4 5 6 7 8 9 10 11 12 13
Size depends on subcarrier spacing
Mini-Slot (URLLC)
Mini-Slot={2,4,7} Symbols

FIG.3

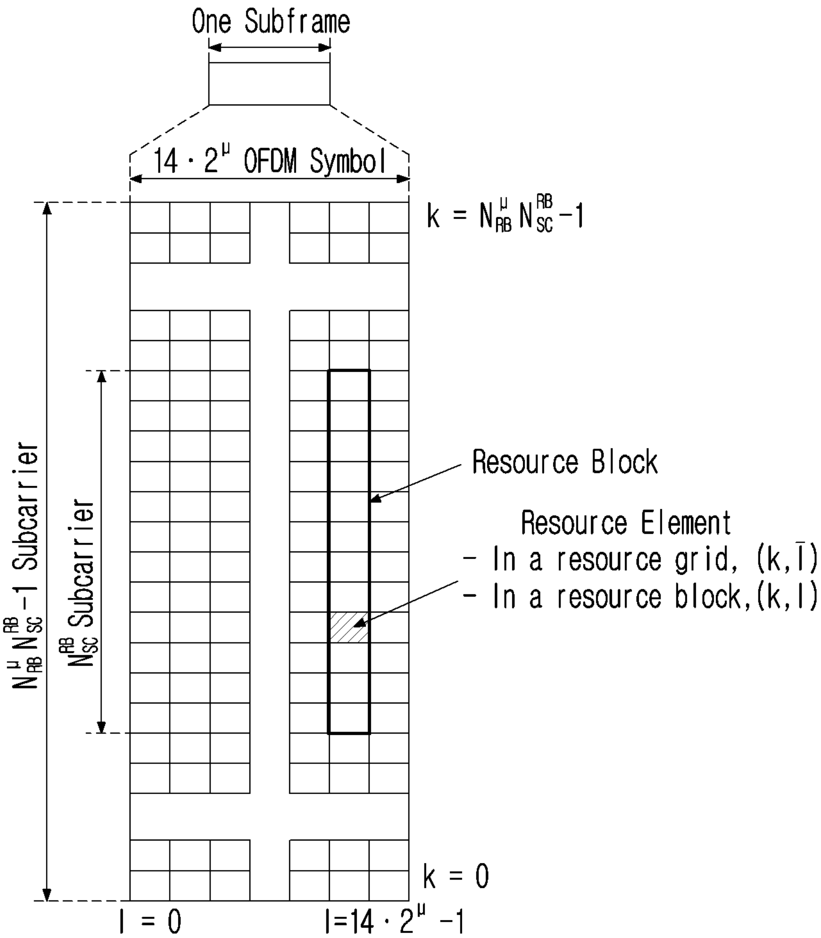
One Subframe
14 · 2^μ OFDM Symbol
k = N^μ_RB N^RB_SC −1
Resource Block
Resource Element
- In a resource grid, (k,l̄)
- In a resource block,(k,l)
N^μ_RB N^RB_SC −1 Subcarrier
N^RB_SC Subcarrier
k = 0
l = 0
l=14 · 2^μ −1

FIG.4

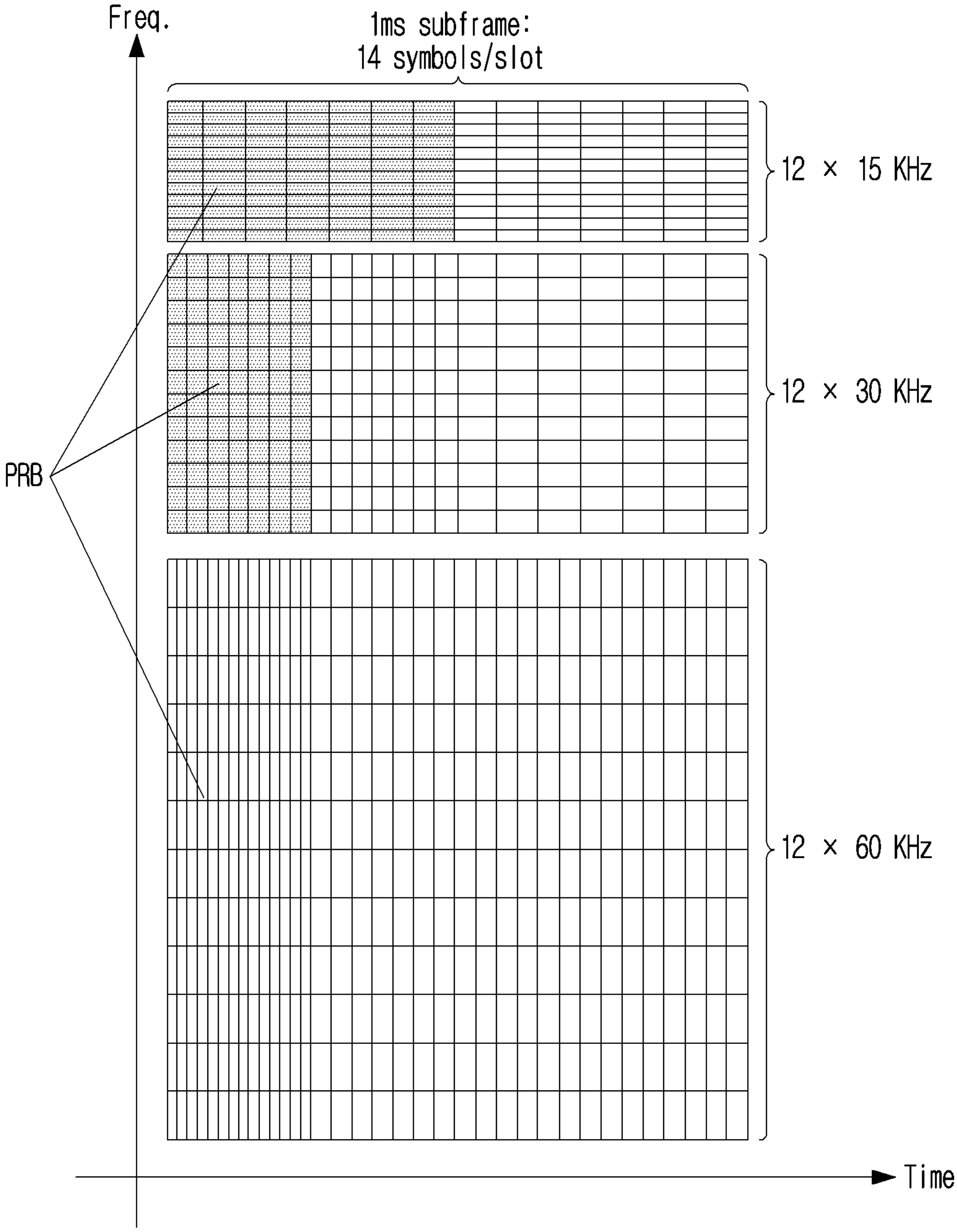
Freq.
1ms subframe:
14 symbols/slot
12 × 15 KHz
12 × 30 KHz
PRB
12 × 60 KHz
Time

FIG.5

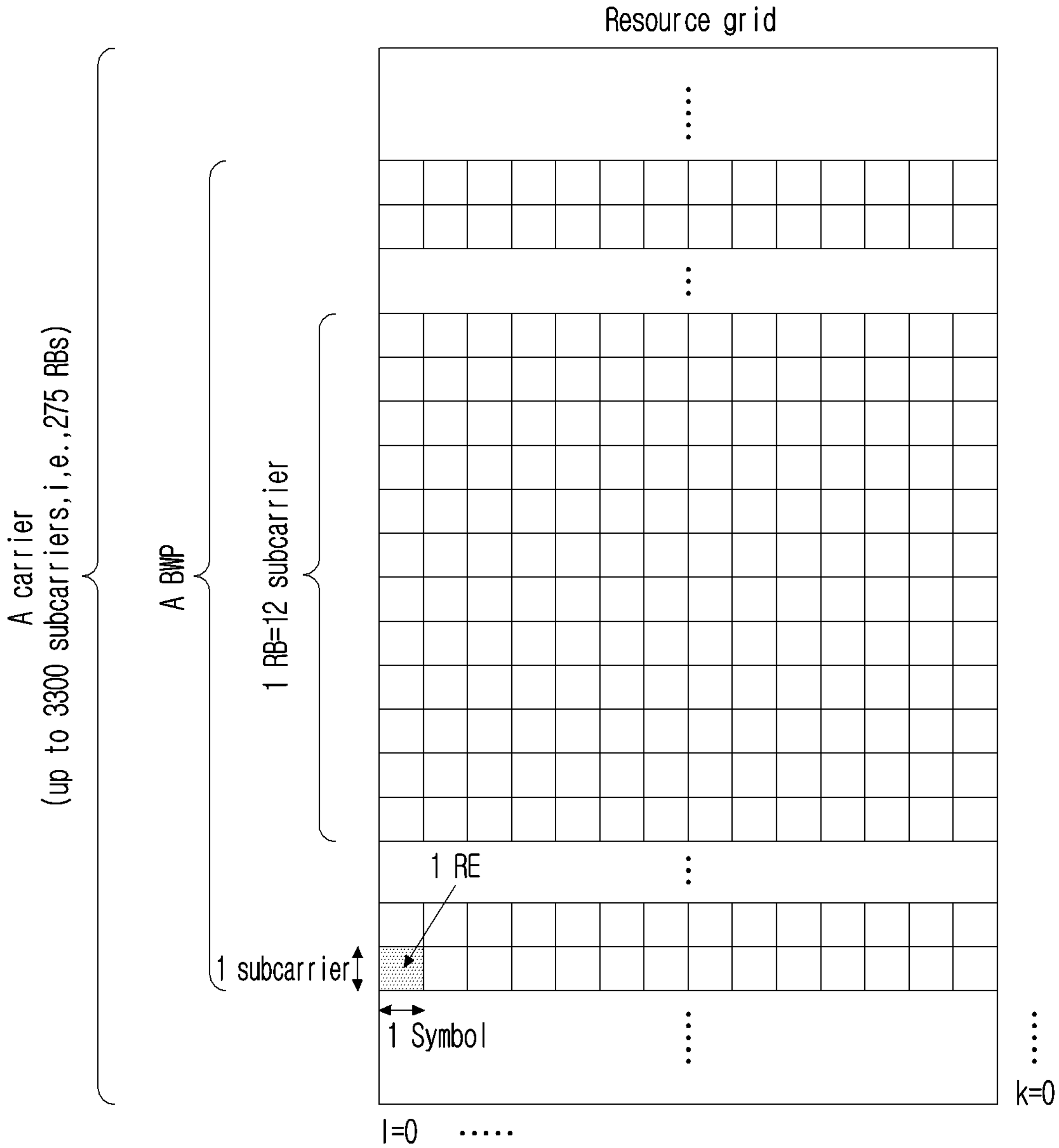
Resource grid
A carrier
(up to 3300 subcarriers,i,e.,275 RBs)
A BWP
1 RB=12 subcarrier
1 RE
1 subcarrier
1 Symbol
k=0
l=0 .....

FIG.6

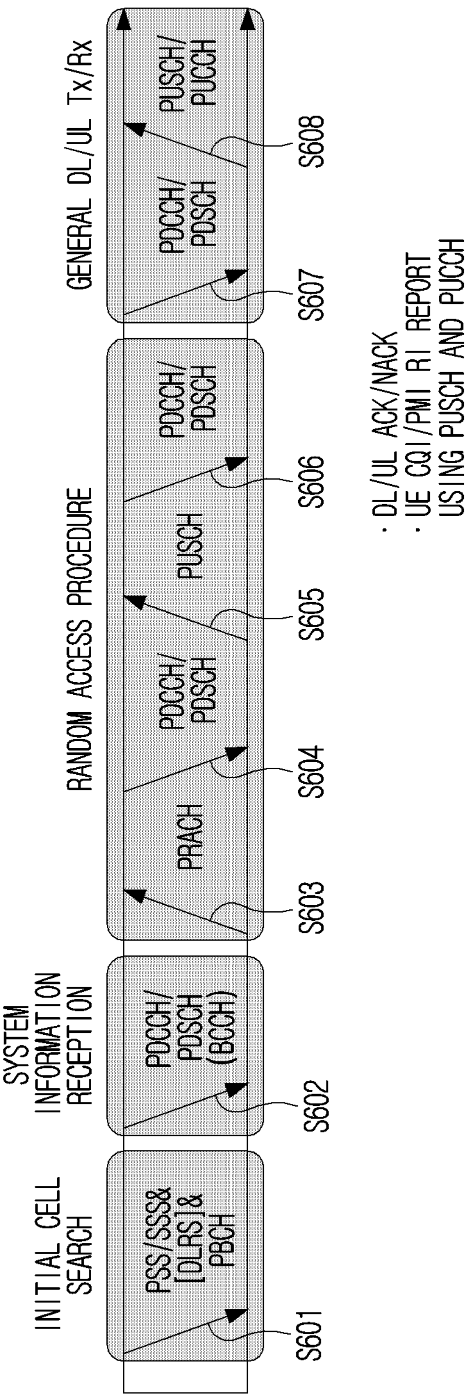
INITIAL CELL SEARCH
PSS/SSS& [DLRS]& PBCH
S601
SYSTEM INFORMATION RECEPTION
PDCCH/ PDSCH (BCCH)
S602
RANDOM ACCESS PROCEDURE
PRACH
S603
PDCCH/ PDSCH
S604
PUSCH
S605
PDCCH/ PDSCH
S606
GENERAL DL/UL Tx/Rx
PDCCH/ PDSCH
S607
PUSCH/ PUCCH
S608
· DL/UL ACK/NACK
· UE CQI/PMI RI REPORT
USING PUSCH AND PUCCH

FIG.7

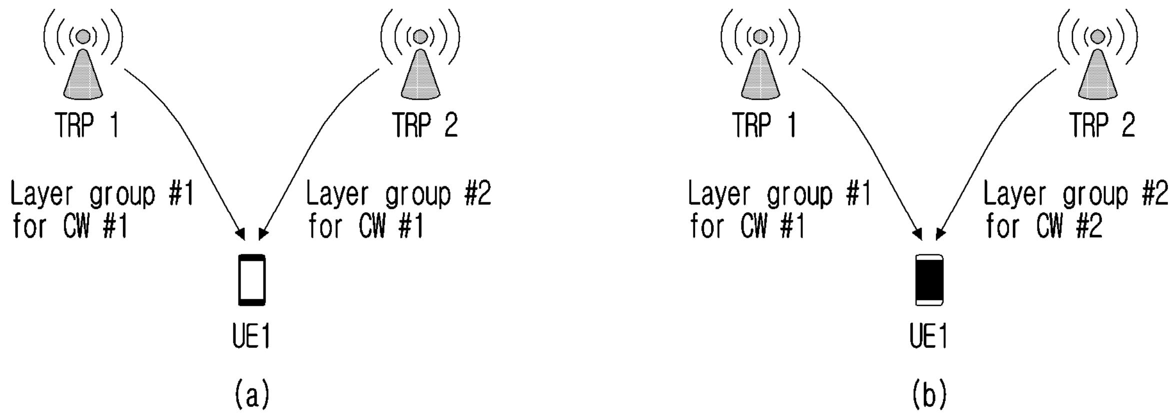
TRP 1
TRP 2
Layer group #1
for CW #1
Layer group #2
for CW #1
UE1
(a)
TRP 1
TRP 2
Layer group #1
for CW #1
Layer group #2
for CW #2
UE1
(b)

FIG.8

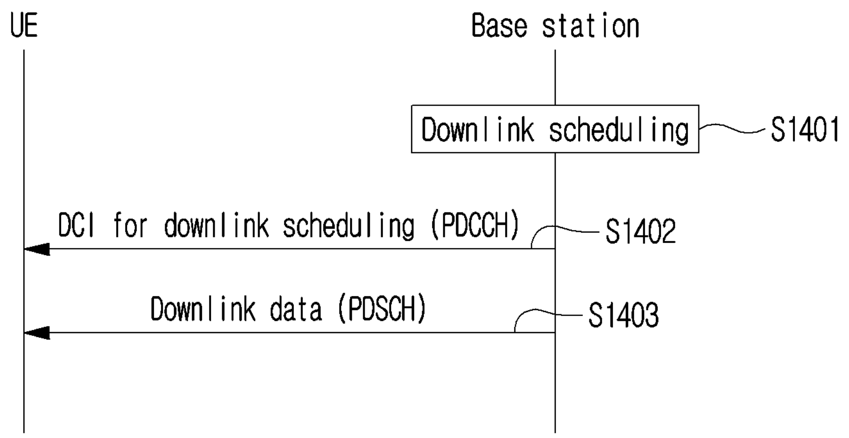
UE
Base station
Downlink scheduling
S1401
DCI for downlink scheduling (PDCCH)
S1402
Downlink data (PDSCH)
S1403

FIG.9

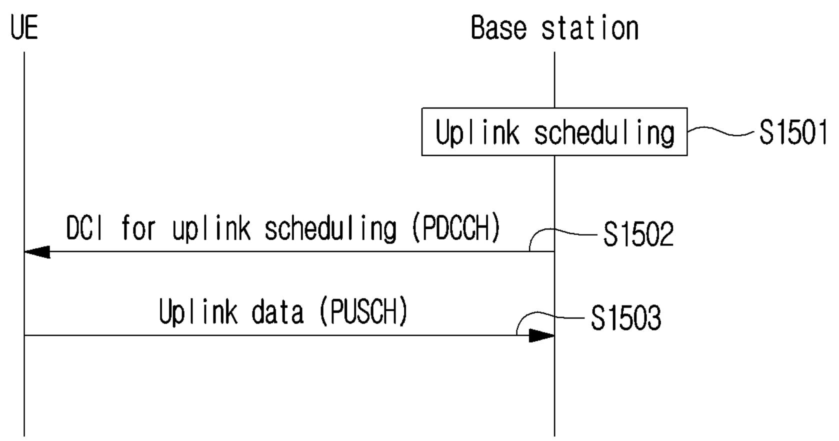
UE
Base station
Uplink scheduling
S1501
DCI for uplink scheduling (PDCCH)
S1502
Uplink data (PUSCH)
S1503

FIG.10

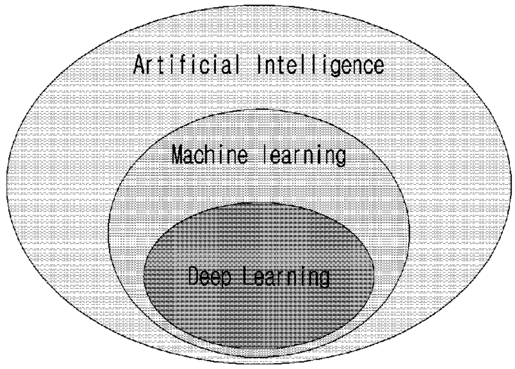


FIG.11

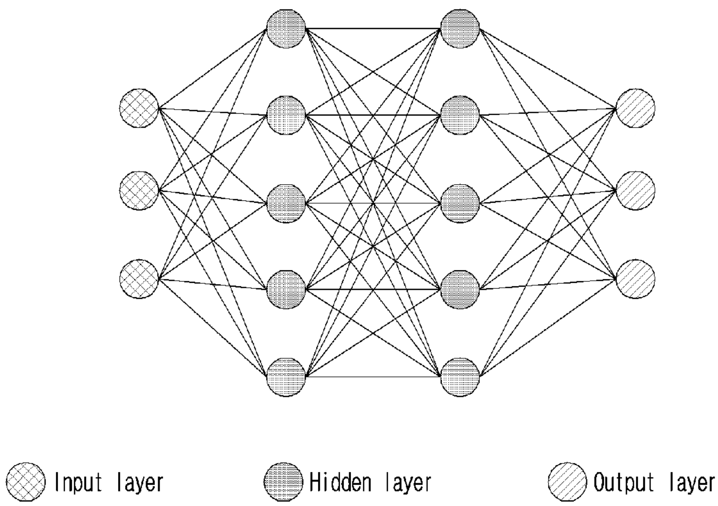


FIG.12

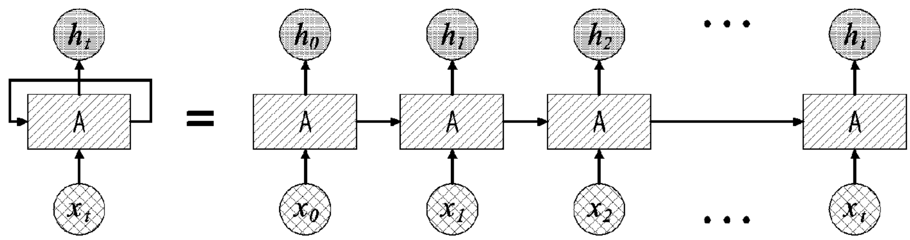

FIG.13

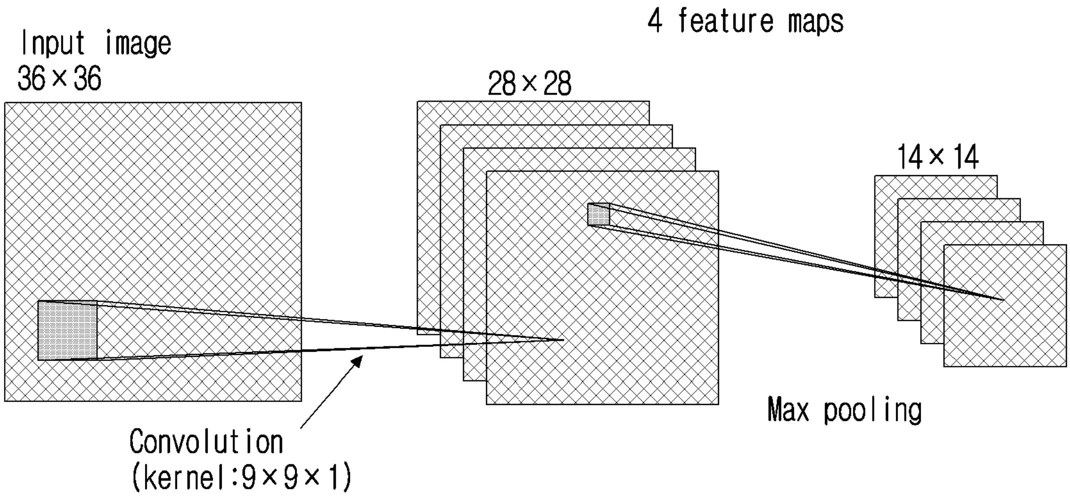
4 feature maps
Input image
36×36
28×28
14×14
Max pooling
Convolution
(kernel:9×9×1)

FIG.14

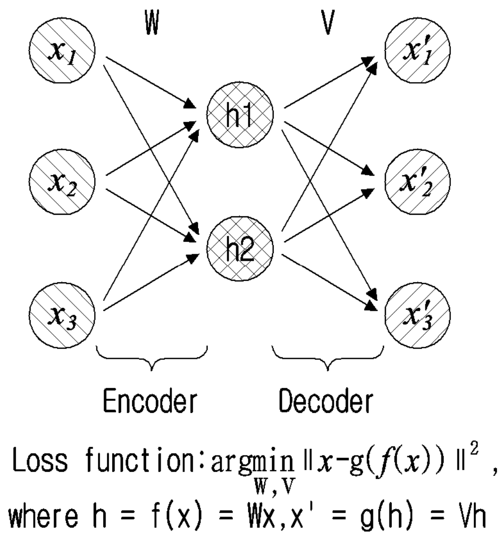
W
V
$x_1$
$x_2$
$x_3$
h1
h2
$x'_1$
$x'_2$
$x'_3$
Encoder
Decoder
Loss function: $\underset{W,V}{\operatorname{argmin}} \| x - g(f(x)) \|^2$,
where h = f(x) = Wx, x' = g(h) = Vh

FIG.15

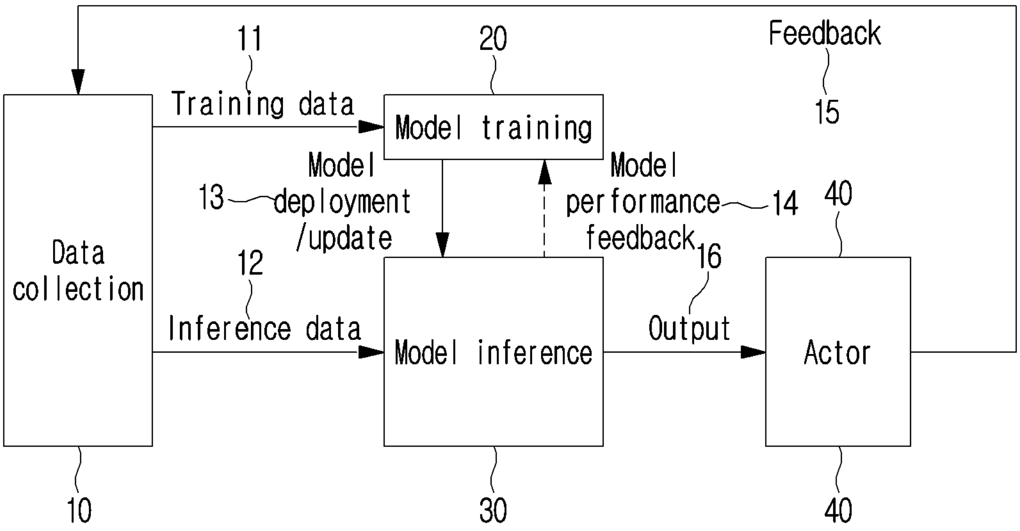
11
20
Feedback
15
Training data
Model training
Model
deployment
/update
13
Model
performance
feedback
14
40
16
12
Data
collection
Inference data
Model inference
Output
Actor
10
30
40

FIG.16

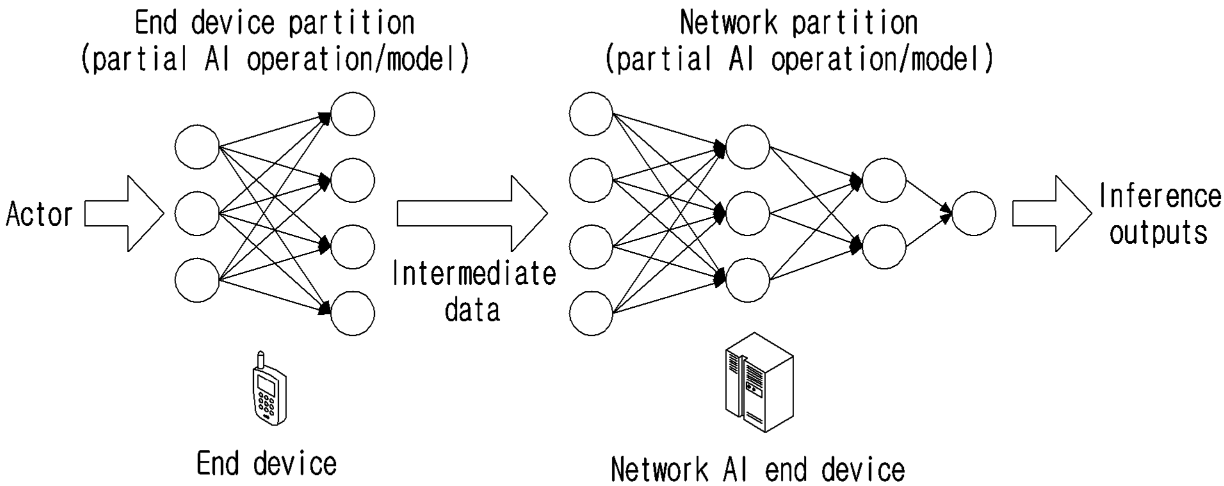
End device partition
(partial AI operation/model)
Network partition
(partial AI operation/model)
Actor
Intermediate
data
Inference
outputs
End device
Network AI end device

FIG.17

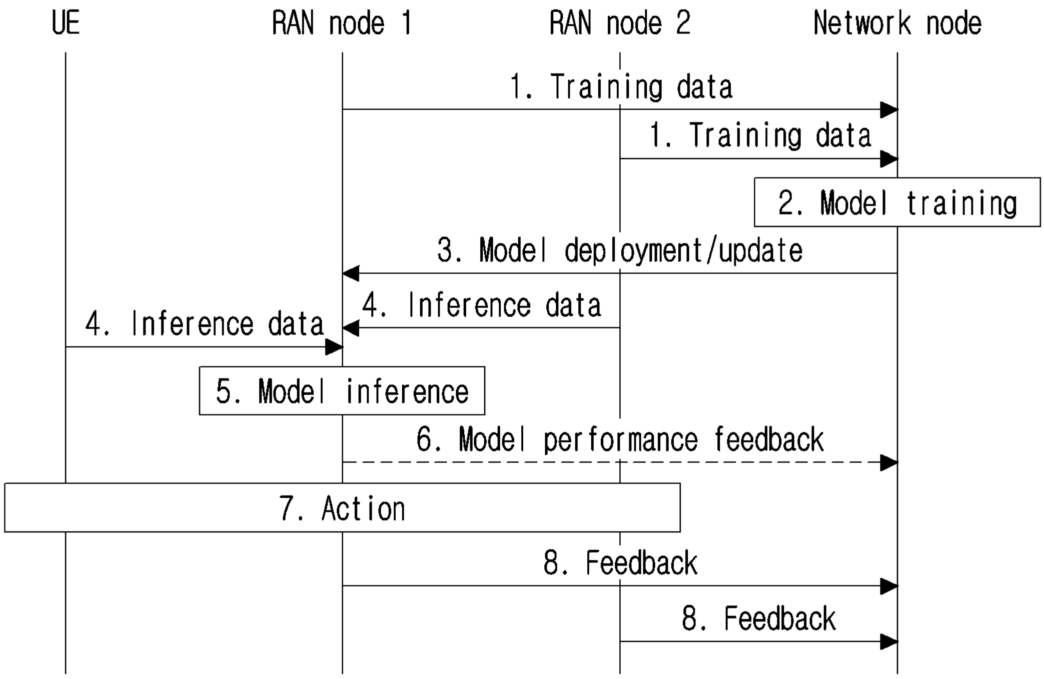
UE
RAN node 1
RAN node 2
Network node
1. Training data
1. Training data
2. Model training
3. Model deployment/update
4. Inference data
4. Inference data
5. Model inference
6. Model performance feedback
7. Action
8. Feedback
8. Feedback

FIG.18

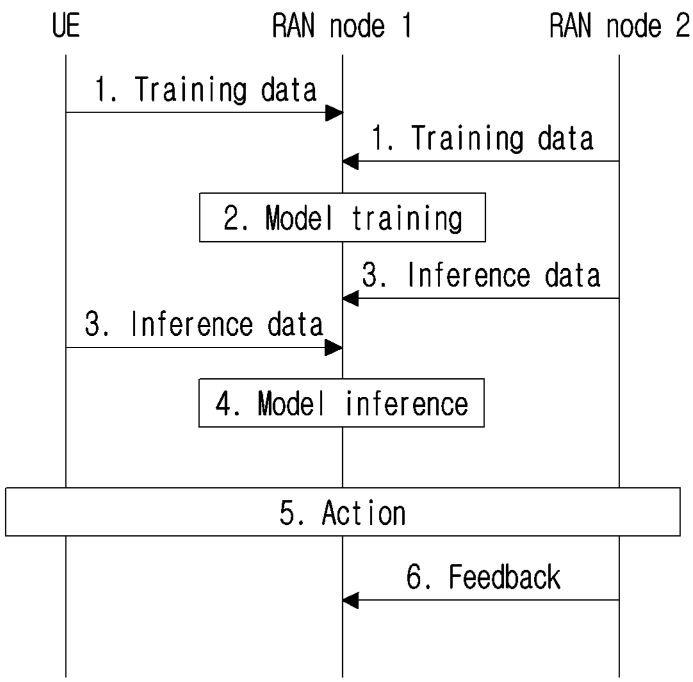
UE
RAN node 1
RAN node 2
1. Training data
1. Training data
2. Model training
3. Inference data
3. Inference data
4. Model inference
5. Action
6. Feedback

FIG.19

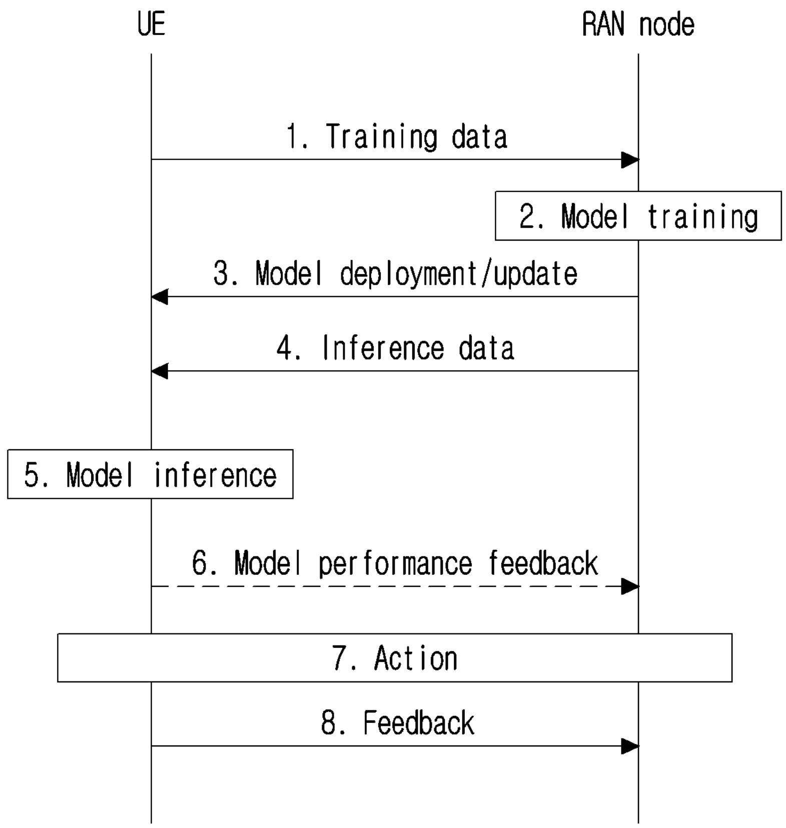
UE
RAN node
1. Training data
2. Model training
3. Model deployment/update
4. Inference data
5. Model inference
6. Model performance feedback
7. Action
8. Feedback

FIG.20

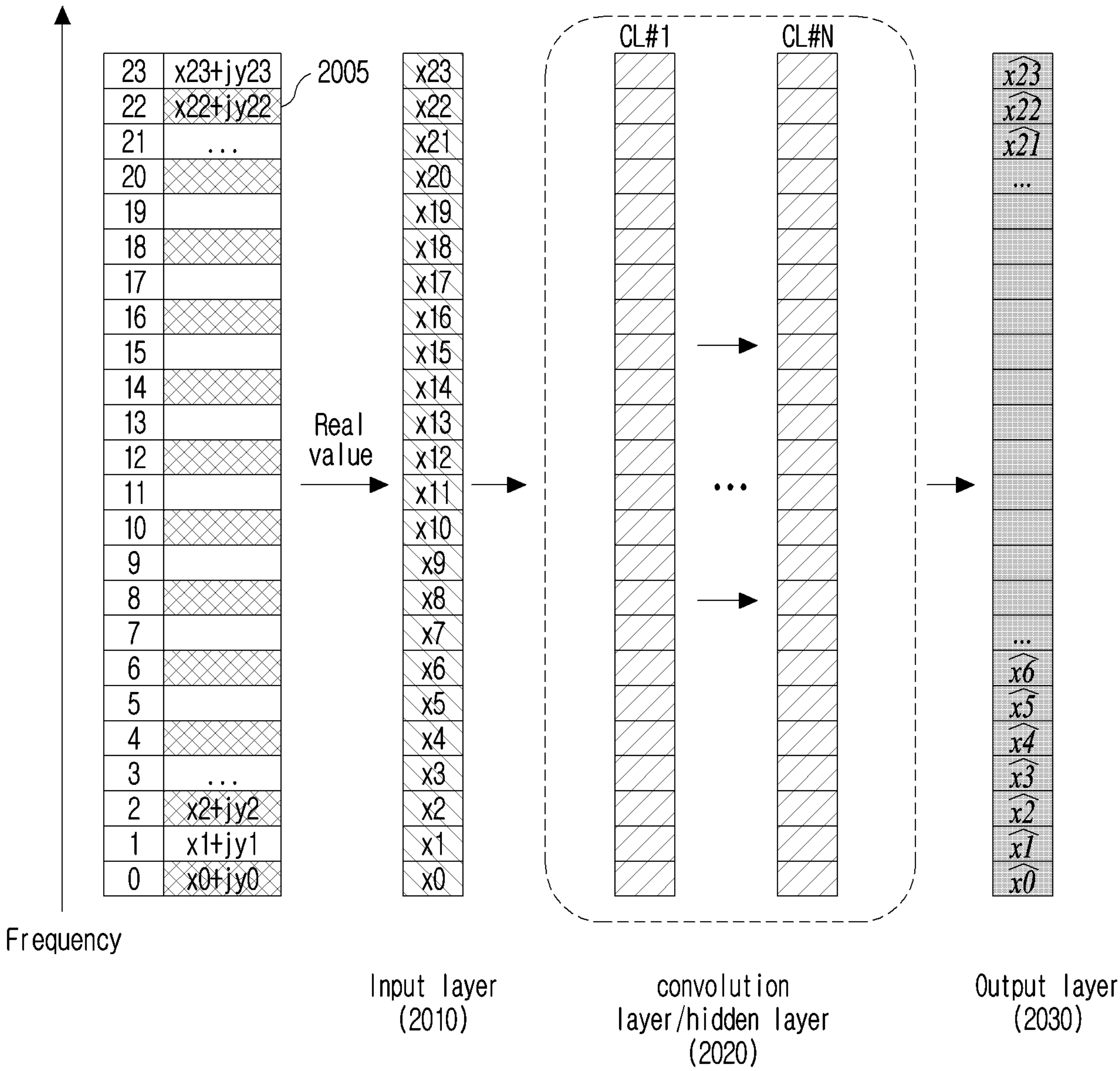

23
22
21
20
19
18
17
16
15
14
13
12
11
10
9
8
7
6
5
4
3
2
1
0
x23+jy23
x22+jy22
...
x2+jy2
x1+jy1
x0+jy0
2005
Frequency
Real value
x23
x22
x21
x20
x19
x18
x17
x16
x15
x14
x13
x12
x11
x10
x9
x8
x7
x6
x5
x4
x3
x2
x1
x0
CL#1
CL#N
...
$\widehat{x23}$
$\widehat{x22}$
$\widehat{x21}$
...
...
$\widehat{x6}$
$\widehat{x5}$
$\widehat{x4}$
$\widehat{x3}$
$\widehat{x2}$
$\widehat{x1}$
$\widehat{x0}$
Input layer
(2010)
convolution
layer/hidden layer
(2020)
Output layer
(2030)

FIG.21

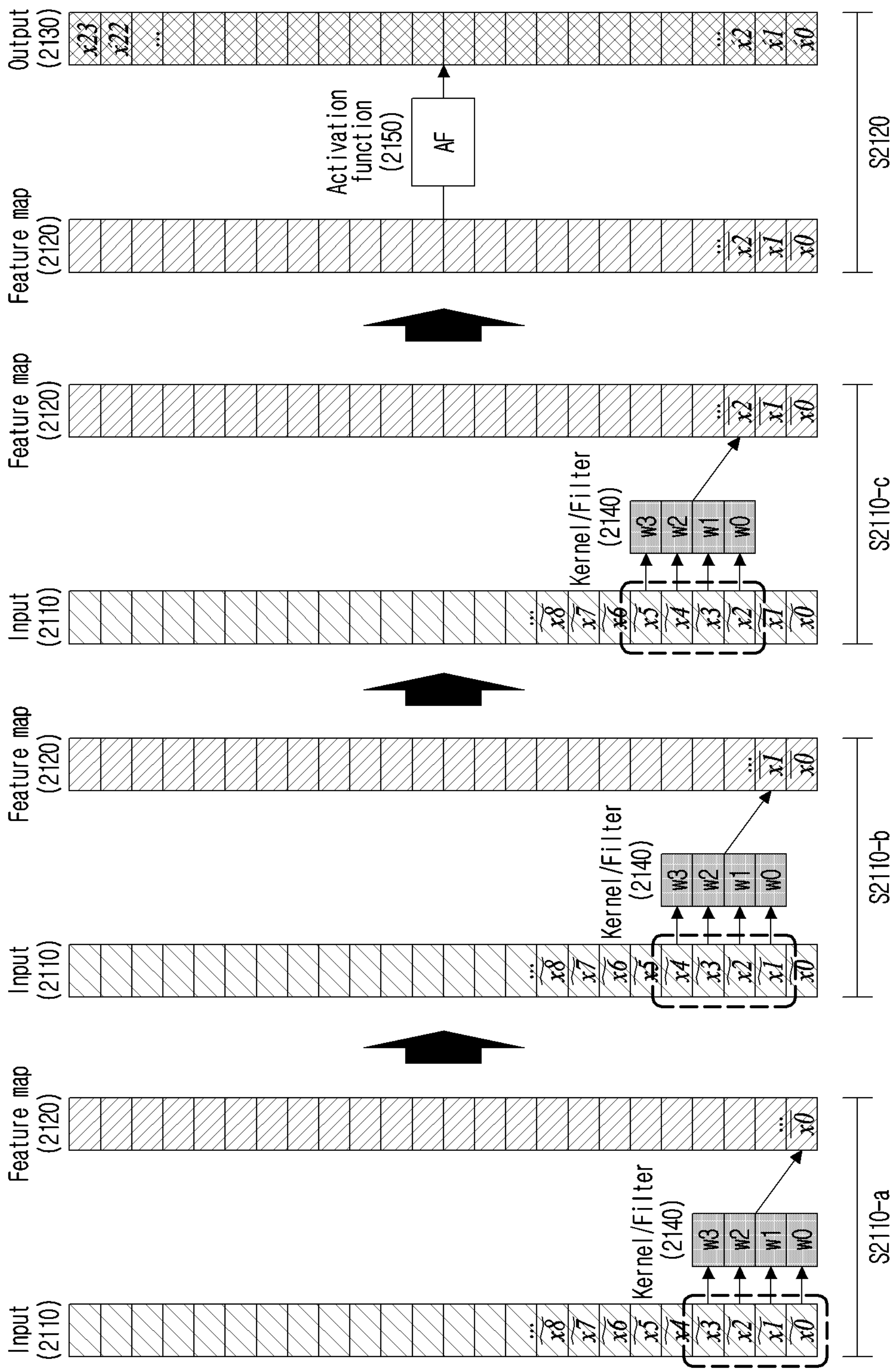

Input (2110)
Kernel/Filter (2140)
w3
w2
w1
w0
Feature map (2120)
Activation function (2150)
AF
Output (2130)
S2110-a
S2110-b
S2110-c
S2120

FIG.22

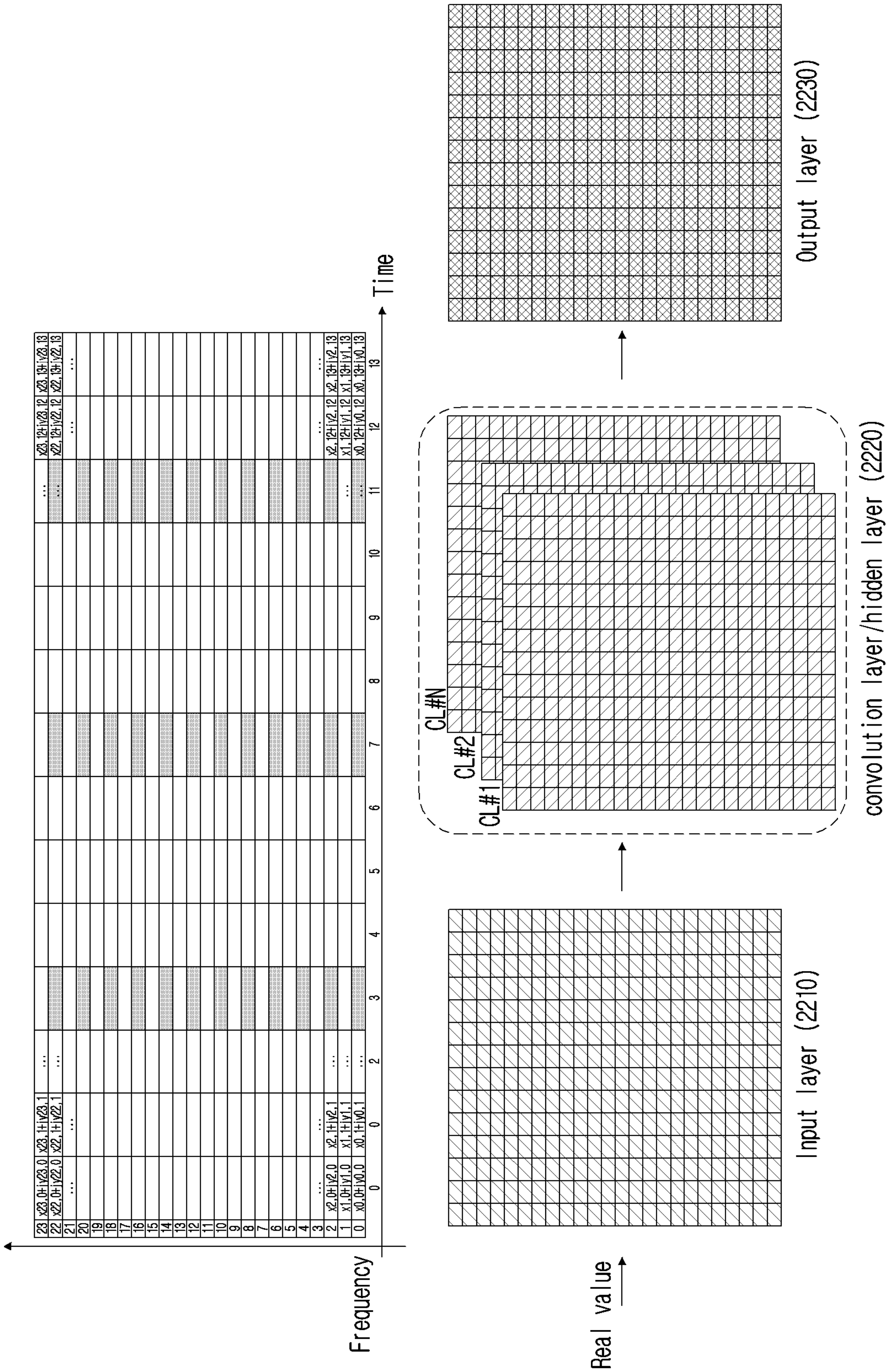
Time
Frequency
Real value
CL#1
CL#2
CL#N
Input layer (2210)
convolution layer/hidden layer (2220)
Output layer (2230)

FIG.23

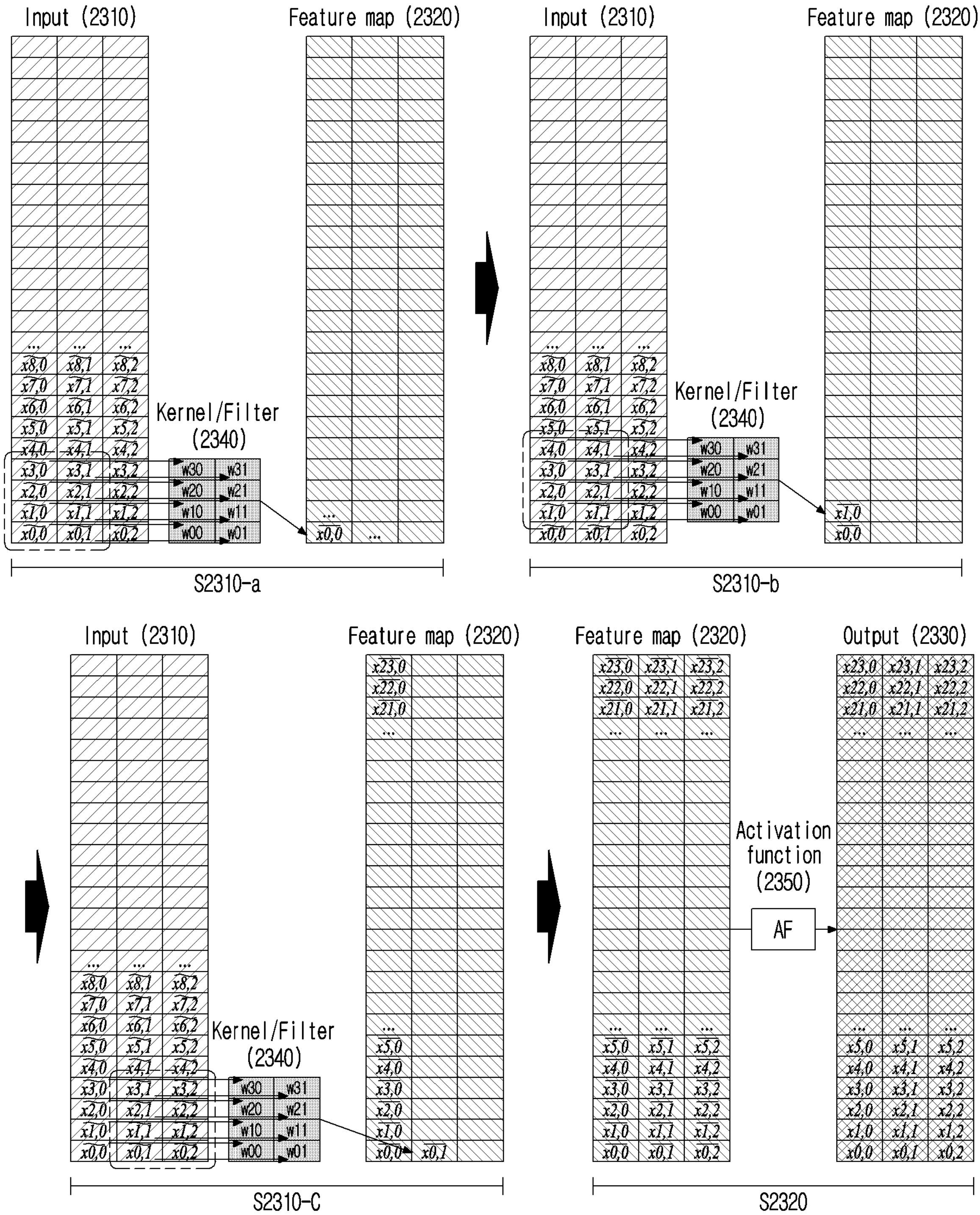
Input (2310)
Feature map (2320)
Kernel/Filter (2340)
w30 w31
w20 w21
w10 w11
w00 w01
S2310-a
S2310-b
S2310-C
Output (2330)
Activation function (2350)
AF
S2320

FIG.24

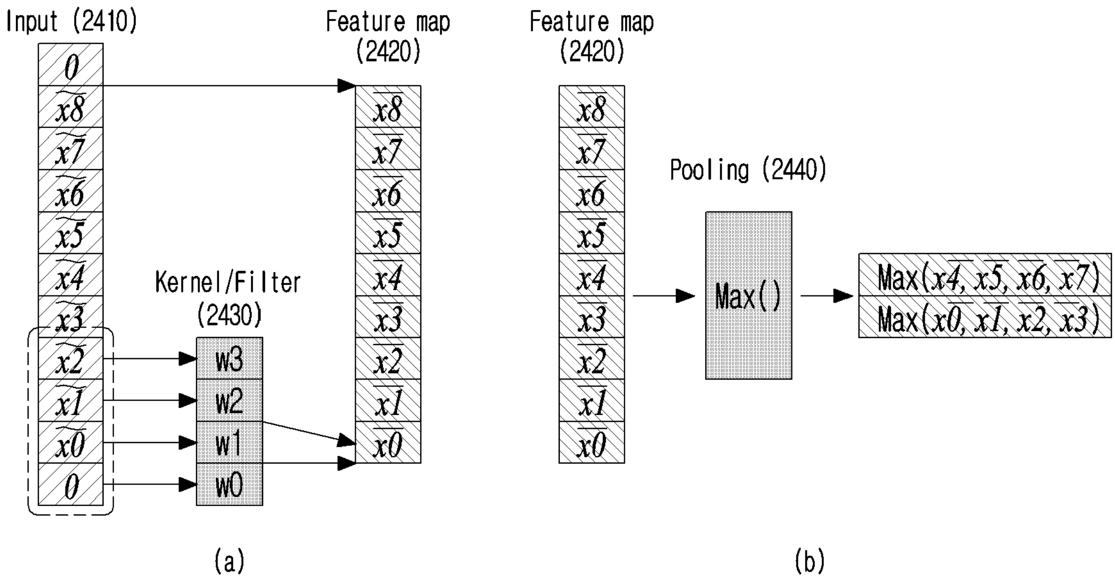
Input (2410)
Kernel/Filter (2430)
w3
w2
w1
w0
Feature map (2420)
Feature map (2420)
Pooling (2440)
Max()
Max(x4, x5, x6, x7)
Max(x0, x1, x2, x3)
(a)
(b)

FIG.25

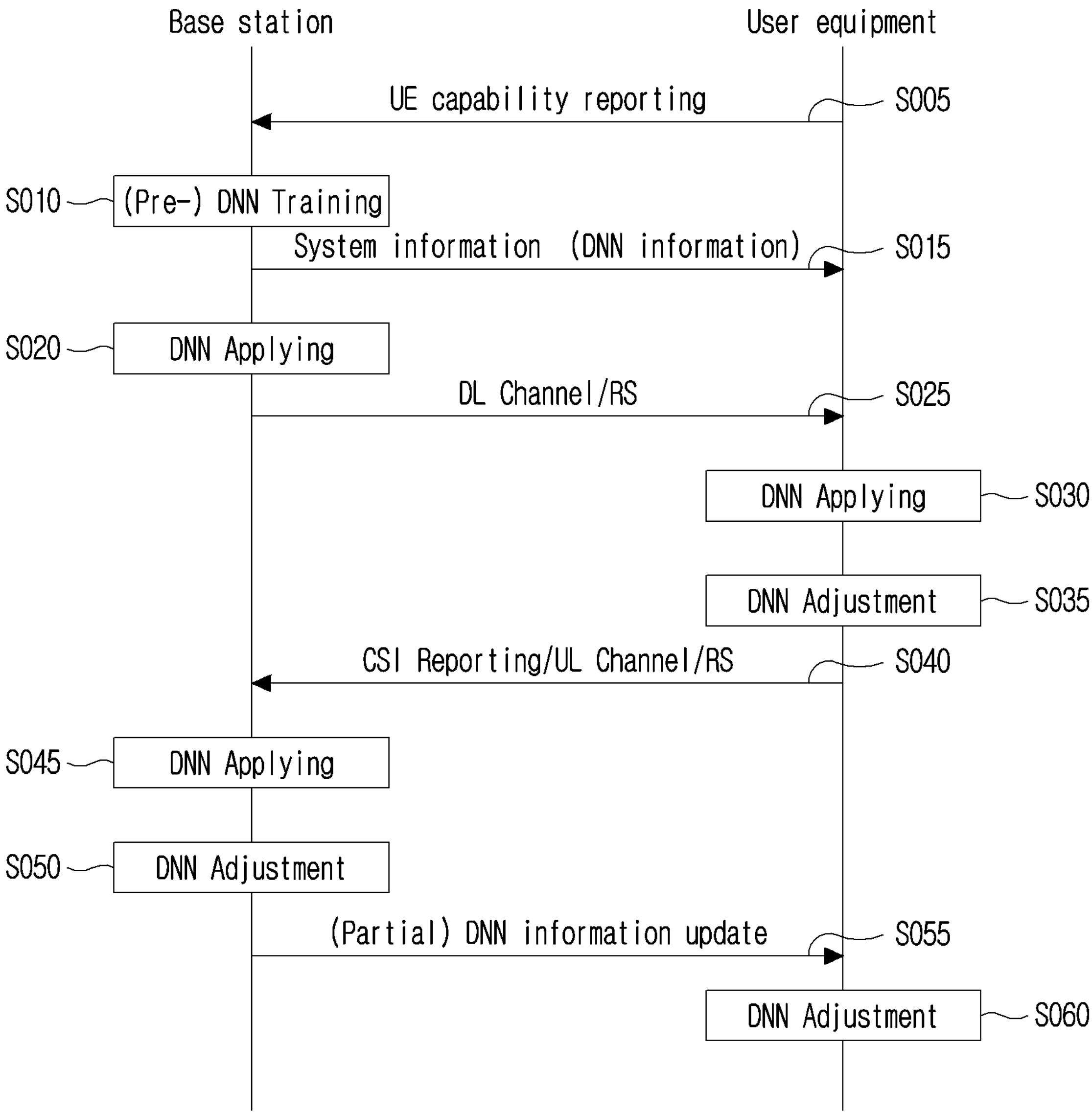
Base station
User equipment
UE capability reporting
S005
S010
(Pre-) DNN Training
System information (DNN information)
S015
S020
DNN Applying
DL Channel/RS
S025
DNN Applying
S030
DNN Adjustment
S035
CSI Reporting/UL Channel/RS
S040
S045
DNN Applying
S050
DNN Adjustment
(Partial) DNN information update
S055
DNN Adjustment
S060

FIG.26

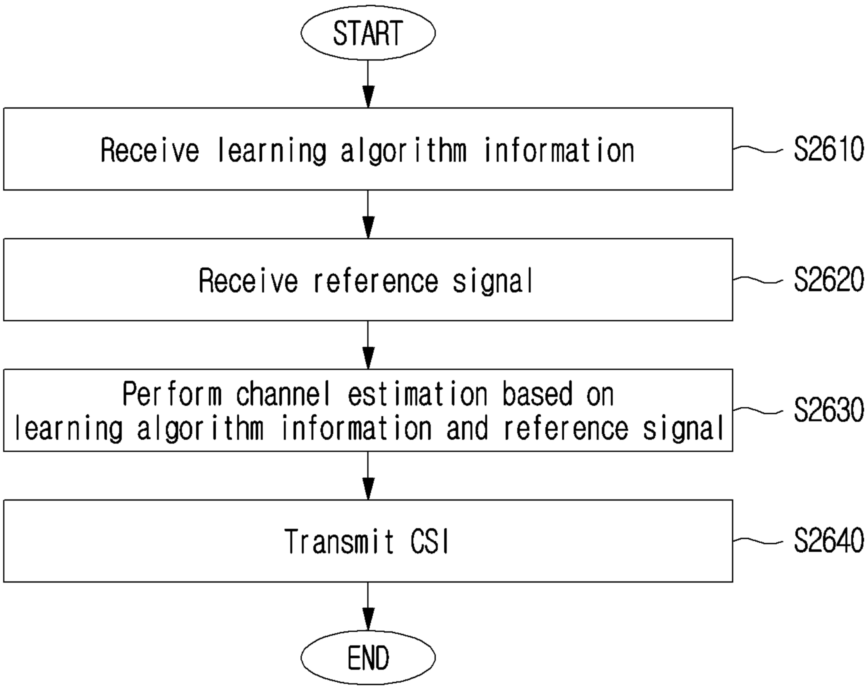
START
Receive learning algorithm information
S2610
Receive reference signal
S2620
Perform channel estimation based on learning algorithm information and reference signal
S2630
Transmit CSI
S2640
END

FIG.27

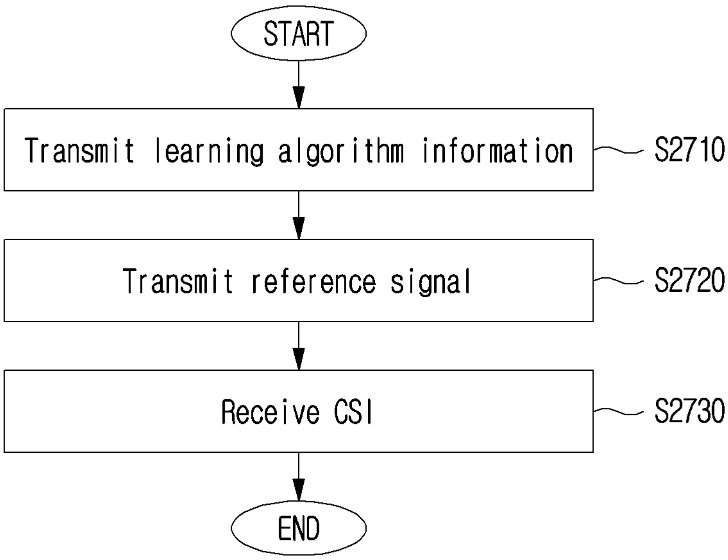
START
Transmit learning algorithm information
S2710
Transmit reference signal
S2720
Receive CSI
S2730
END

FIG.28

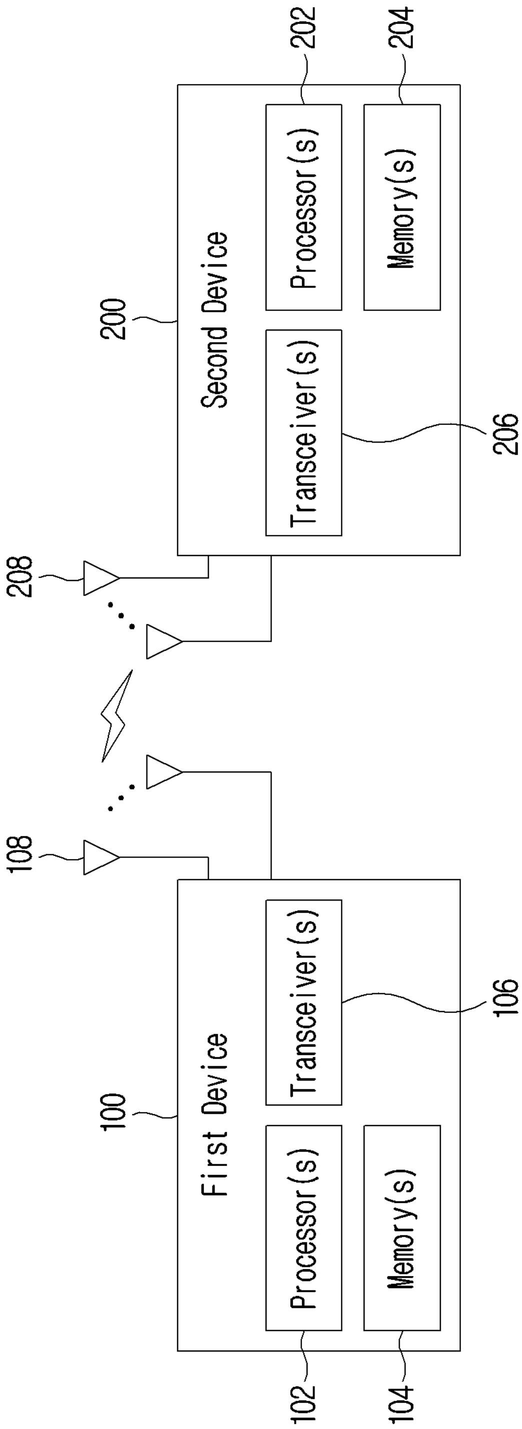
200
Second Device
Processor(s)
202
Memory(s)
204
Transceiver(s)
206
208
108
100
First Device
Transceiver(s)
106
Processor(s)
102
Memory(s)
104

**INTERNATIONAL SEARCH REPORT**

International application No. **PCT/KR2022/014631**

**A. CLASSIFICATION OF SUBJECT MATTER**

**H04L 25/02**(2006.01)i; **G06N 3/08**(2006.01)i; **G06N 20/00**(2019.01)i

According to International Patent Classification (IPC) or to both national classification and IPC

**B. FIELDS SEARCHED**

Minimum documentation searched (classification system followed by classification symbols)

H04L 25/02(2006.01); H04L 9/06(2006.01); H04L 9/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 상태 정보(channel state information, CSI) 보고(report), 러닝 알고리즘(learning algorithm), 참조 신호(reference signal), 파라미터(parameter)

**C. DOCUMENTS CONSIDERED TO BE RELEVANT**

| Category* | Citation of document, with indication, where appropriate, of the relevant passages | Relevant to claim No. |
|---|---|---|
| X<br>Y | OPPO. Discussion on R18 study on AI/ML-based 5G enhancements. RP-211809, 3GPP TSG RAN Meeting #93-e, e-Meeting. 06 September 2021.<br>See sections 2.2-2.3, 3.1-3.2, 4.2, A.4 and C.1-C.4; and figures A-2 and C-2. | 1-2,4-5,7-15<br>3,6 |
| Y | ZTE et al. Support of Artificial Intelligence Applications for 5G Advanced. RP-212383, 3GPP TSG RAN Meeting #93-e, e-Meeting. 06 September 2021.<br>See slides 6 and 15. | 3,6 |
| X | ERICSSON. Views on Rel-18 AI/ML on Air-Interface. RP-212346, 3GPP TSG RAN Meeting #93-e, e-Meeting. 06 September 2021.<br>See sections 2.1-2.2. | 1,11-15 |
| A | CAICT et al. Introduction of the 2nd Wireless communication AI competition (WAIC). RP-212078, 3GPP TSG RAN Meeting #93-e, e-Meeting. 06 September 2021.<br>See slides 5-13. | 1-15 |
| A | US 2021-0143982 A1 (NETSPECTIVE COMMUNICATIONS LLC) 13 May 2021 (2021-05-13)<br>See paragraphs [0032]-[0039]. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 January 2023** | **10 January 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2022/014631**

| Patent document cited in search report | Publication date (day/month/year) | Patent family member(s) | Publication date (day/month/year) |
|---|---|---|---|
| US 2021-0143982 A1 | 13 May 2021 | None | |

Form PCT/ISA/210 (patent family annex) (July 2022)